# EUROPEAN PATENT APPLICATION

(11) **EP 3 284 799 A1**
(43) Date of publication of application: **21.02.2018**
(21) Application number: 16184742.1
(22) Date of filing: 18.08.2016
(51) Int. Cl.: C09K 9/02, C08L 33/12, G02F 1/15

(54) **COMPOSITION ESPECIALLY FOR PRINTING OR COATING COMPRISING (METH)ACRYLATE POLYMERS**

(71) Applicant: BASF SE, 67056 Ludwigshafen am Rhein (DE)
(72) Inventor: HEMGESBERG, Maximilian, 51368 Leverkusen (DE); CSIHONY, Szilard, 67056 Ludwigsshafen (DE); NOERENBERG, Ralf, 67059 Ludwigshafen (DE); BOKEL, Felicia, 49448 Lemfoerde (DE)
(74) Representative: Eisenführ Speiser

(57) **Abstract**

Described are a composition especially for printing or coating, the use of certain (meth)acrylate polymers as rheological modifiers in compositions for printing or coating, a process for producing a layer assembly comprising a colored or electrochromic layer, and an article comprising such layer assembly.

## Description

The present invention relates to a composition especially for printing or coating and to the use of certain (meth)acrylate polymers as rheological modifiers in compositions for printing or coating. The invention also relates to a process for producing a layer assembly comprising a colored or electrochromic layer and to an article comprising such layer assembly.

Layers having controllable alteration of light transmission are used in devices or applications like optical filters, windows, films, opthalmic lenses, actinometers, molecular sensors, photochromic inks, paints or fibers, variable transmission filters, optical information storage systems, optoelectronic systems and reversible holographic systems. Controllable alteration of light transmission is achieved by incorporating a compound having electrochromic and photochromic properties into a layer or coating disposed on a surface of a substrate. The substrate is electronically conductive, or comprises an electronically conductive surface capable of applying an electric field to the layer comprising the compound having electrochromic and photochromic properties. Said electronically conductive surface of the substrate is herein also referred to as an electrode. The layer comprising said compound having electrochromic and photochromic properties is usually sandwiched between a first electrode and a second electrode. A layer comprising said compound having electrochromic and photochromic properties is herein also referred to as an electrochromic layer.

A compound having electrochromic and photochromic properties is capable of transitioning between an optically transparent ("light") state and a colored ("dark") state responsive to application of light in the UV and/or short wavelength-VIS range, or application of an electric voltage. More specifically, a compound having electrochromic and photochromic properties may darken (reach said 'dark state') when exposed to light in the UV and/or VIS range, and may lighten ("fade", achieve said 'light state") when exposed to an electric charge ('electro-fading'). Such a compound having electrochromic and photochromic properties is also referred to as an auto-darkening material, see e.g. WO 2013/152425. Certain compounds having electrochromic and photochromic properties fade upon exposure to selected wavelengths of visible (VIS) light ("photofade", "photobleach"), without sacrificing of the ability to be electrofaded when restored to a darkened state.

WO 2013/152425 discloses a composition (referred to as a "switching material") comprising one or more compounds having electrochromic and photochromic properties dispersed homogeneously through the switching material, one or more polymers, and an electrolyte comprising a salt and a solvent portion comprising one or more solvents.

WO 2013/152425 also discloses an article (referred to as a "switchable film") comprising a first and optionally a second substantially transparent substrate; a first and a second electrode disposed on the surface of at least one of the substrates; and a switching material as defined above disposed between the first and the optional second substrate and in contact with the first and the second electrode, and a laminate assembly comprising said switchable film laminated between a first and a second sheet of glass.

The function of the polymer in the composition (referred to as a "switching material) according to WO 2013/152425 includes
- modulating the rheology of the composition in order to aid in handling said composition and facilitate processing said composition into a layer on a substrate
- rendering the composition in a suitable shape (e.g. cast, extruded, coated or molded), i.e. in the form of a layer on a surface of a substrate.

Selection of the one or more polymers depends on several factors including chemical stability, compatibility with the other constituents of the composition (said salts and said solvent portion of the electrolyte and said compounds having electrochromic and photochromic properties, see above) and the constituents of the substrates (including the electronically conducting materials at the surfaces of said substrates), stability against electrical voltage and against light irradiation in the UV and/or VIS range, rheological behavior, optical properties, glass transition temperature and many others.

According to WO 2013/152425, the polymer in the composition referred to as a "switching material" is preferably selected from the group of polyols, more specifically from the group of polyvinylacetals, most preferably from the group of polyvinylbutyrals (PVB).

Polyvinyl butyral is obtained by acidic hydrolysis (e.g. using hydrochloric acid) of polyvinyl acetate and subsequent (at least partial) acetalization of the obtained polyvinyl alcohol with butanal (butyraldehyde). The obtained product often contains residues of hydrochloric acid and/or acetic acid.

Unfortunately, polyvinylbutyrals exhibit some drawbacks, e.g. insufficient stability especially in contact with solvents typically present in the solvent portion of the electrolyte of the "switching material" disclosed in WO 2013/152425. Degradation of the polyvinyl butyral in the electrochromic layer does not only result in reduced stability and reduced performance of said layer. Moreover, degradation products of polyvinyl butyral and residual acid and/or aldehydes, such as 2-ethylhexanal, present in the polyvinyl butyral may cause corrosion of electronically conductive materials (e.g., transparent conducting oxides or metallic electronic conductive materials) of the electrodes, resulting in impairment of electronic conductivity and reduced light transmission due to the formation of colored reaction products.

Accordingly it is an object of the invention to provide compositions which overcome the above-mentioned drawbacks.

According to the present invention, there is provided a composition, especially for printing or coating, comprising the following constituents
(A) a liquid phase
(B) one or more polymers which are copolymerization products of
   - two or more different (meth)acrylate monomers CHR¹=CH-(CO)-OR² wherein
      R¹ is hydrogen or methyl
      R² is selected from the group consisting of
   - linear and branched unsubstituted alkyl groups having 1 to 22 carbon atoms, preferably 2 to 22 carbon atoms
   - linear and branched hydroxyalkyl groups having 2 to 22 carbon atoms
   - cycloalkyl groups having 3 to 22 carbon atoms,
   - alkyl-substituted cycloalkyl groups having 4 to 22 carbon atoms,
   - and optionally one or more further monomers having polymerizable double bonds which are not (meth)acrylate monomers CHR¹=CH-(CO)-OR²
(C) one or more colorants selected from the group consisting of dyes and pigments wherein said colorants are preferably compounds having electrochromic and photochromic properties
wherein the constituents (B) and (C) are dissolved or dispersed in said liquid phase (A). As used herein the phrase "dissolved or dispersed" means that the
- either all of said constituents are dissolved in said liquid phase (A),
- or all of said constituents are dispersed in said liquid phase (A),
- or some of said constituents are dissolved in said liquid phase (A) and some of said constituents are dispersed in said liquid phase (A).

A further aspect of the present invention relates to the use of (meth)acrylate polymer as defined above as a rheological modifier in a composition according to the present invention.

Surprisingly it has been found that use of a meth(acrylate)polymers (B) as defined above as a rheological modifier in a composition for printing or coating of a colored or electrochromic layer as defined above results in improved rheological properties of said composition and accordingly superior quality of the layer formed from a composition according to the present invention (i.e. the layer obtainable by the process of the present invention), especially in case of electrochromic layers.

Without wishing to be bound by theory, it is assumed that in a composition according to the present invention the above-defined (meth)acrylate polymers (B) act as rheological modifiers in such manner that their contribution to the viscosity is not significantly influenced by the shear rate over a broad range (from low shear to high shear).

A composition according to the present invention comprises a liquid phase (A), wherein one or more of the above-defined meth(acrylate) polymers (B) and one or more colorants (C) are dispersed or dissolved. For defining concentration ranges (see below), the constituents (B) and (C) as defined above are not considered as constituents of the liquid phase (A) as defined above.

The colorants (C) are selected from the group consisting of dyes and pigments. A dye is a colorant which in the composition according to the invention is present in dissolved form. A pigment is a colorant which in the composition according to the invention is present in the form of dispersed particles. Preferred colorants are compounds having electrochromic and photochromic properties. The term "compounds having electrochromic and photochromic properties" is generally defined above, for further details see below. Those compounds belong either to the group of dyes or to the group of pigments, depending on whether they are present in the composition according to the present invention in dissolved form or in dispersed form.

In certain cases, the liquid phase (A) of the above-defined composition comprises one or more liquids having a boiling point of 120 °C or less. In certain cases the liquid phase (A) of the above-defined composition consists of one or more liquids having a boiling point of 120 °C or less. Said liquids having a boiling point of 120 °C or less merely act as a vehicle for applying the composition to a surface of a substrate, preferably by means of a printing or coating technique, especially by means of screen printing and stencil printing, and do not from a permanent constituent of the layer formed by applying a composition according to the present invention on a surface of a substrate (i.e. the layer obtainable by the process of the present invention).

Said liquids having a boiling point of 120 °C or less are preferably selected from the group consisting of methoxy-2-methylpropane, tetrahydrofurane, 2-methyl-tetrahydrofurane, 1,4-dioxane, toluene, ethanol, methanol, iso-propanol, ethylacetate, methylacetate, acetone, acetonitrile and butanone.

In certain cases, a composition according to the present invention comprises a liquid phase (A) consisting of one or more liquids having a boiling point of 120 °C or less, wherein one or more of the above-defined meth(acrylate) polymers (B) and one or more colorants (C) selected from the group consisting of dyes and pigments are dispersed or dissolved. Such compositions are useful for forming a colored layer by means of a printing or coating technique, especially screen printing or stencil printing.

Optionally a composition according to the present invention further comprises
(E) one or more polyurethane polymers which are polyadducts of
   (E1) diisocyanate monomers
      and
   (E2) diols consisting of
      (E2-1)a portion of first diols having a molecular weight in the range of from 50 g/mol to < 500 g/mol
      (E2-2) a portion of second diols having a molecular weight in the range of from 500 g/mol to 3500 g/mol
   wherein the fraction of
   (E1) diisocyanate monomers is 20 wt.-% to 80 wt.-%
   (E2-1)said first diols is 5 wt.-% to 35 wt.-%
   (E2-2)said second diols is 5 wt.-% to 60 wt.-%
   based on the total weight of said (E1) diisocyanate monomers and (E2) diols.

Optionally a composition according to the present invention further comprises
(F) one or more crosslinking agents for said polymers (B) and/or (E).

A preferred composition according to the present invention comprises
(A) a liquid phase comprising
   (A-1) one or more liquids having a melting point of -20 °C or less and a boiling point of 150 °C or more
   (A-2) optionally one or more liquids having a boiling point of 120 °C or less,
(B) one or more polymers which are copolymerization products of
   - two or more different (meth)acrylate monomers CHR¹=CH-(CO)-OR² wherein
      R¹ is hydrogen or methyl
      R² is selected from the group consisting of
         - linear and branched unsubstituted alkyl groups having 1 to 22 carbon atoms, preferably 2 to 22 carbon atoms
         - linear and branched hydroxyalkyl groups having 2 to 22 carbon atoms
         - cycloalkyl groups having 3 to 22 carbon atoms,
         - alkyl-substituted cycloalkyl groups having 4 to 22 carbon atoms,
         - and optionally one or more further monomers having polymerizable double bonds which are not (meth)acrylate monomers CHR¹=CH-(CO)-OR²
(C) one or more compounds having electrochromic and photochromic properties
(D) one or more electrolytes,
wherein the constituents (B), (C) and (D) are dissolved or dispersed in said liquid phase (A).

As used herein the phrase "dissolved or dispersed" means that the
- either all of said constituents are dissolved in said liquid phase (A),
- or all of said constituents are dispersed in said liquid phase (A),
or some of said constituents are dissolved in said liquid phase (A) and some of said constituents are dispersed in said liquid phase (A).Constituents (C) and (D) are usually dissolved in said liquid phase (A).

A preferred composition as defined above comprises a liquid phase (A) as defined above, wherein one or more of the above-defined meth(acrylate) polymers (B), and one or more compounds (C) having electrochromic and photochromic properties and one or more electrolytes (D) are dispersed or dissolved. Compounds having electrochromic and photochromic properties (C) and electrolytes (D) are usually dissolved in said liquid phase (A). For defining concentration ranges (see below), the constituents (B), (C) and (D) as defined above are not considered as constituents of the liquid phase (A) as defined above.

Said preferred compositions according to the present invention are particularly suitable for forming a layer having a controllable alteration of light transmission as described above, i.e. an electrochromic layer.

The constituents of the above-defined preferred composition according to the present invention are now described in more detail.

The liquid phase (A) of the above-defined preferred composition comprises (A-1) one or more liquids having a melting point of -20 °C or less and a boiling point of 150 °C or more and optionally (A-2) one or more liquids having a boiling point of 120 °C or less.

In some cases, the liquid phase (A) of the above-defined preferred composition comprises
(A-1) one or more liquids having a melting point of -20 °C or less and a boiling point of 150 °C or more and
(A-2) one or more liquids having a boiling point of 120 °C or less.

In other cases, the liquid phase (A) of the above-defined preferred composition consists of
(A-1) one or more liquids having a melting point of -20 °C or less and a boiling point of 150 °C or more.

Accordingly, in such cases the liquid phase (A) does not contain any liquids (A-2) having a boiling point of 120 °C or less.

In certain specific cases the liquid phase (A) of the above-defined preferred composition consists of
(A-1) one or more liquids having a melting point of -20 °C or less and a boiling point of 150 °C or more and
(A-2) one or more liquids having a boiling point of 120 °C or less.

When an electrochromic layer is formed from an above-defined preferred composition according to the present invention, the one or more liquids (A-1) having a melting point of -20 °C or less and a boiling point of 150 °C or more remain in said electrochromic layer. The liquids (A-1) allow dissolution of the one or more electrolytes (D) present in the preferred composition according to the present invention (as defined above) and in the layer formed from a preferred composition according to the present invention. Accordingly, said liquids (A-1) having a melting point of -20 °C or less and a boiling point of 150 °C or more may be considered as playing a role similar or corresponding to the "solvent portion" of the composition (switching material) disclosed in WO 2013/152425. For further details of said electrolytes (D), see below.

Selection of the one or more liquids (A-1) depends on several factors including chemical stability, compatibility with the other constituents of the composition (polymers, electrolytes and said compounds having electrochromic and photochromic properties, see above) and the constituents of the substrates (including the electronically conducting materials at the surfaces of said substrates), stability against electrical voltage and against light irradiation in the UV and/or VIS range, capability of dissolving electrolytes, dielectric constant.

Preferably, said liquid phase (A) comprises said liquids having a melting point of -20 °C or less and a boiling point of 150 °C or more in the form of a mixture (A-1) consisting of
(1) one or more compounds selected from the group consisting of 1,2-butylene carbonate, 2,3-butylene carbonate, propylene carbonate and glycerol carbonate
(2) one or more compounds selected from the group consisting of
   cyclohexylacetate
   alkyl-cyclohexylacetates wherein said alkyl group is selected from the group consisting of alkyls having 1 to 9, preferably 1 to 4 carbon atoms, preferably 4-tertbutylcyclohexylacetate
   2-ethylhexylacetate
   dialkyl esters of 1,2-cyclohexanedicarboxylic acid, wherein said alkyl groups are selected from the group consisting of alkyls having 1 to 4 carbon atoms, preferably 1,2-cyclohexanedicarboxylic acid diethylester
   dihydroterpinylacetate
   isobornylacetate
   bornylacetate
   fenchylacetate
(3) optionally one or more compounds selected from the group consisting of
   2,2,4-trimethyl-1,3-pentanediol monoisobutyrate
   dimethyl-2-methylglutarate
   diethyl malonate
   propylene glycol diacetate
   ethylene glycol diacetate
   glycerol triesters of carboxylic acids having 3 to 6 carbon atoms, preferably glycerol triesters of propionic acid and butyric acid
   tri-alkyl acetylcitrates, wherein said alkyl groups are selected from the group consisting of alkyls having 1 to 4 carbon atoms, preferably tri-n-ethylacetylcitrate and tri-n-butylacetylcitrate
wherein in said mixture (A-1) the total weight fraction of said compounds (2) and (3) is 50 wt.-% or more, preferably 60 wt.-% or more, more preferably 70 wt.-% or more, most preferably 80 wt.-% or more, based on the total weight of said mixture (A-1). In said mixture (A-1) the weight fraction of said compounds (1) is 50 wt.-% or less, preferably 40 wt.-% or less, more preferably 30 wt.-% or less, most preferably 20 wt.-% or less, based on the total weight of said mixture (A-1).

With regard to the above-defined constituents of mixture (A-1), each generic alkyl group listed herein is meant to include all possible isomers (straight-chain and branched), and in cases where an above-mentioned compound exists in the form of two or more stereoisomers, said compound includes each of those stereoisomers as well as mixtures thereof, including racemic mixtures.

Preferably, said mixture (A-1) consists of
(1) one or more compounds selected from the group consisting of 1,2-butylene carbonate, 2,3-butylene carbonate, propylene carbonate and glycerol carbonate
(2) one or more compounds selected from the group consisting of
   cyclohexylacetate
   4-tertbutylcyclohexylacetate
   2-ethylhexylacetate
   1,2-cyclohexanedicarboxylic acid diethylester
   dihydroterpinylacetate
   isobornylacetate
   bornylacetate
   fenchylacetate
wherein in said mixture (A-1) the weight fraction of said compound (2) is 50 wt.-% or more, preferably 60 wt.-% or more, more preferably 70 wt.-% or more, most preferably 80 wt.-% or more, based on the total weight of said mixture (A-1). In said mixture (A-1) the weight fraction of said compounds (1) is 50 wt.-% or less, preferably 40 wt.-% or less, more preferably 30 wt.-% or less, most preferably 20 wt.-% or less, based on the total weight of said mixture (A-1).

In this regard, it is further preferred that said mixture (A-1) consists of
(1) a compound selected from the group consisting of 1,2-butylene carbonate, 2,3-butylene carbonate and propylene carbonate
(2) a compound selected from the group consisting of cyclohexylacetate, 4-tertbutylcyclohexylacetate and 2-ethylhexylacetate
wherein in said mixture (A-1) the weight fraction of said compound (2) is 50 wt.-% or more, preferably 60 wt.-% or more, more preferably 70 wt.-% or more, most preferably 80 wt.-% or more, based on the total weight of said mixture (A-1). In said mixture (A-1) the weight fraction of said compounds (1) is 50 wt.-% or less, preferably 40 wt.-% or less, more preferably 30 wt.-% or less, most preferably 20 wt.-% or less, based on the total weight of said mixture (A-1).

In a preferred alternative, said mixture (A-1) consists of
(1) one or more compounds selected from the group consisting of 1,2-butylene carbonate, 2,3-butylene carbonate, propylene carbonate and glycerol carbonate
(2) one or more compounds selected from the group consisting of
   cyclohexylacetate
   4-tertbutylcyclohexylacetate
   2-ethylhexylacetate
   1,2-cyclohexanedicarboxylic acid diethylester;
   dihydroterpinylacetate
   isobornylacetate
   bornylacetate
   fenchylacetate
(3) one or more compounds selected from the group consisting of
   2,2,4-trimethyl-1,3-pentanediol monoisobutyrate
   dimethyl-2-methylglutarate
   diethyl malonate
   propylene glycol diacetate
   ethylene glycol diacetate
   glycerol tripropionate
   glycerol tributyrate
   tributylacetylcitrate
   triethylacetylcitrate
wherein in said mixture (A-1)
the weight fraction of said compounds (2) is 50 wt.-% to 80 wt.-%, preferably 60 wt.-% to 70 wt.-%, and
the weight fraction of said compounds (3) is 10 wt.-% to 30 wt.-%, preferably 15 wt.-% to 25 wt.-%,
in each case based on the total weight of said mixture (A-1).

In said mixture (A-1) the weight fraction of said compounds (1) is 5 wt.-% to 40 wt.-%, preferably 5 wt.-% to 25 wt.-%, in each case based on the total weight of said mixture (A-1), ).

In this regard, it is further preferred that said mixture (A-1) consists of
(1) a compounds selected from the group consisting of 1,2-butylene carbonate, 2,3-butylene carbonate, propylene carbonate and glycerol carbonate
(2) a compound selected from the group consisting of cyclohexylacetate, 4-tertbutylcyclohexylacetate and 2-ethylhexylacetate
(3) a compound selected from the group consisting of dimethyl-2-methylglutarate, diethyl malonate, propylene glycol diacetate, ethylene glycol diacetate, glycerol tripropionate, glycerol tributyrate, tributylacetylcitrate and triethylacetylcitrate,
wherein in said mixture (A-1)
the weight fraction of said compound (2) is 50 wt.-% to 80 wt.-%, preferably 60 wt.-% to 70 wt.-%, and
the weight fraction of said compound (3) is 10 wt.-% to 30 wt.-%, preferably 15 wt.-% to 25 wt.-%,
in each case based on the total weight of said mixture (A-1).

In said mixture (A-1) the weight fraction of said compounds (1) is 5 wt.-% to 40 wt.-%, preferably 5 wt.-% to 25 wt.-%, in each case based on the total weight of said mixture (A-1), ).

It has been found that polymeric substrates, especially those comprising polyethylene terephthalate, which tend to swell in the presence of organic liquids, exhibit a surprisingly low tendency to swell when coated with a composition according to the invention comprising one of said preferred mixtures (A-1). The tendency to swell is estimated from the weight increase of the polymeric substrate after 1 hour of storing said substrate in the solvent at 120 °C.

For further details regarding the preferred mixtures (A-1), reference is made to the non-prepublished patent application "Composition for preparing an electrochromic layer" filed by the same applicant and on the same day as the present application. The content of said patent application is incorporated herein by reference.

Said one or more liquids (A-2) having a boiling point of 120 °C or less, if present, merely act as a vehicle for applying the composition to a surface of a substrate, preferably by means of a printing or coating technique, especially by means of screen printing and stencil printing, and do not remain in the layer formed from a composition according to the present invention (i.e. the layer obtainable by the process of the present invention, see below). More specifically said liquids (A-2) serve the purpose of facilitating processing of a composition according to the present invention, e.g. by reducing the viscosity and improving the coatability. Accordingly, said liquids (A-2) having a boiling point of 120 °C or less may be considered as playing a role similar or corresponding to the "sacrificial solvent" which may be present in the composition (switching material) disclosed in WO 2013/152425.

If present, said liquids (A-2) having a boiling point of 120 °C or less are preferably selected from the group consisting of methoxy-2-methylpropane, tetrahydrofurane, 2-methyl-tetrahydrofurane, 1,4-dioxane, toluene, ethanol, methanol, iso-propanol, ethylacetate, methylacetate, acetone, acetonitrile and butanone.

A composition according to the present invention comprises
(B) one or more polymers which are copolymerization products of
   - two or more different (meth)acrylate monomers CHR¹=CH-(CO)-OR² wherein
      R¹ is hydrogen or methyl
      R² is selected from the group consisting of
         - linear and branched unsubstituted alkyl groups having 1 to 22 carbon atoms, preferably 2 to 22 carbon atoms
         - linear and branched hydroxyalkyl groups having 2 to 22 carbon atoms
         - cycloalkyl groups having 3 to 22 carbon atoms,
         - alkyl-substituted cycloalkyl groups having 4 to 22 carbon atoms,
   - and optionally one or more further monomers having polymerizable double bonds which are not (meth)acrylate monomers CHR¹=CH-(CO)-OR².

Said polymers (B) are also referred to as (meth)acrylate polymers. As used herein, the term (meth)acrylates in each case includes acrylates and methacrylates. Preferably, said(meth)acrylate polymer is a copolymerization product of two or three different (meth)acrylate monomers CHR¹=CH-(CO)-OR².

Preferably in said (meth)acrylate monomers CHR¹=CH-(CO)-OR², R² is selected from the group consisting of 2-hydroxyethyl, 2-hydroxypropyl, ethyl, butyl, hexyl, octyl, decyl, dodecyl, tetradecyl, hexadecyl, heptadecyl, octadecyl, cyclohexyl, bornyl, isobornyl, fenchyl, dihydroterpinyl, 4-tertbutylcyclohexyl, 2-tertbutylcyclohexyl, 4-methylcyclohexyl and 4-ethylcyclohexyl. Each generic alkyl group and hydroxy alkyl group listed herein is meant to include all possible isomers (straight-chain and branched).

Preferred are polymers (B) having a weight average molecular weight in the range of from 10000 g/mol to 2000000 g/mol as determined by gel permeation chromatography.

Preferred are polymers (B) which are copolymerization products of two different (meth)acrylate monomers CHR¹=CH-(CO)-OR².

Preferred copolymerization products of two different (meth)acrylate monomers CHR¹=CH-(CO)-OR² are copolymerization products of
- a first (meth)acrylate monomer selected from the group consisting of 2-hydroxyethylmethacrylate and 2-hydroxyethylacrylate
- and a second (meth)acrylate monomer selected from the group consisting of ethylmethacrylate and n-dodecylmethacrylate
wherein the mole ratio first (meth)acrylate monomer / second (meth)acrylate monomer is preferably in the range of from 1:1 to 1:15, preferably 1:1 to 3:7.

Also preferred are polymers (B) which are copolymerization products of three different (meth)acrylate monomers CHR¹=CH-(CO)-OR². Preferably one of these three different (meth)acrylate monomers CHR¹=CH-(CO)-OR² is a hydroxy(meth)acrylate monomer.

Preferred copolymerization products of three different (meth)acrylate monomers CHR¹=CH-(CO)-OR² are copolymerization products of
- a first (meth)acrylate monomer selected from the group consisting of 2-hydroxyethylmethacrylate and 2-hydroxyethylacrylate
- ethylmethacrylate
- and a third (meth)acrylate monomer selected from the group consisting of 4-tertbutylcyclohexylmethacrylate, cyclohexylmethacrylate and n-docecylmethacrylate
wherein the mole ratio first (meth)acrylate monomer / ethylmethacrylate / third (meth)acrylate monomer is in the range of from 9:9:2 to 1:1:18, preferably 9:9:2 : 3:1:6.

Preferred polymers (B) are those wherein two or more of the above-defined preferred features are combined.

Suitable polymers (B) are commercially available or can be obtained from commercially available monomers by preparation processes known by the skilled person.

A preferred composition according to the present invention as defined above comprises
(C) one or more compounds having electrochromic and photochromic properties.

A compound (C) is a compound which has both, photochromic properties as defined above and electrochromic properties as defined above.

The photochromic properties of said compound (C) consist in the capability of reversibly darkening, i.e. decreasing the transmission of said compound (C) for visible light, when said compound (C) is exposed to light comprising wavelengths of 525 nm or less (a range including UV light, and some short-wavelength portion of visible light). Furthermore, the photochromic properties of some preferred compounds (C) include the capability of reversibly fading, i.e. increasing the transmission of said compound (C) for visible light, when said compound (C) is exposed to light having longer wave lengths in the visible range (preferably up to 750 nm).

The electrochromic properties of said compound (C) consist in the capability of reversibly fading, i.e. increasing the transmission of said compound (C) for visible light, when said compound (C) is exposed to an electric charge (electrofading). Depending on the chemical nature of the compound (C), electrofading is achieved either by cathodic reduction or by anodic oxidation.

Said compounds (C) are preferably selected from the group consisting of hexatrienes, diarylethenes, dithienylcyclopentenes and fulgides. Suitable compounds are commercially available. Examples of suitable diarylethene compounds are disclosed e.g. in US 7,777,055, WO 2010/142019, WO 2013/044371 and WO 2013/152425.

A preferred composition according to the present invention as defined above comprises
(D) one or more electrolytes.

The term "electrolyte" denotes a substance which is capable of dissociating into mobile ions. In an electrochromic layer obtainable from a preferred composition according to the present invention as defined above, said electrolytes (D), when dissolved in said liquids (A-1), are at least partly dissociated into mobile ions, which migrate to the electrodes between which the electrochromic layer is disposed, to form an electrical double-layer at the electrode/electrochromic layer interface when an electric field is applied. Accordingly, said electrolytes (D) may be considered as playing a role similar or corresponding to the "salts" of the composition (referred to as a switching material) disclosed in WO 2013/152425.

Preferred electrolytes (D) are selected from the group consisting
ionic liquids having
cations selected from the group consisting of tetraalkyl ammonium, 1-alkyl-3-methyl imidazolium, 1-alkyl-1-methyl pyrrolidinium and 1-alkyl-1-methyl piperidinium, wherein said alkyl is selected from the group consisting of methyl, ethyl, n-propyl and n-butyl,
and anions selected from the group consisting of tetrafluoroborate, tetracyanoborate, hexafluorophosphate, bis(fluoromethyl)sulfonylimide, bis(trifluoromethylsulfonyl)imide and tris(pentafluoroethyl)trifluorophosphate.

The compounds (D) as defined above are ionic liquids. Such compounds are commercially available. Preferred compounds (D) are selected from the group consisting of 1-ethyl-3-methylimidazolium bis(fluoromethyl)sulfonylimide, 1-ethyl-3-methylimidazolium bis(trifluoromethylsulfonyl)-imide, 1-ethyl-3-methylimidazolium tris(pentafluoroethyl) trifluorophosphate and 1-ethyl-3-methylimidazolium tetrafluoroborate.

Optionally a composition according to the present invention further comprises
(E) one or more polyurethane polymers which are polyadducts of
   (E1) diisocyanate monomers
      and
   (E2) diols consisting of
      (E2-1) a portion of first diols having a molecular weight in the range of from 50 g/mol to < 500 g/mol, preferably from 50 g/mol to 490 g/mol
      (E2-2) a portion of second diols having a molecular weight in the range of from 500 g/mol to 3500 g/mol
wherein the fraction of
(E1) diisocyanate monomers is 20 wt.-% to 80 wt.-%
(E2-1) said first diols is 5 wt.-% to 35 wt.-%
(E2-2) said second diols is 5 wt.-% to 60 wt.-%
based on the total weight of said (E1) diisocyanate monomers and (E2) diols dissolved or dispersed in said liquid phase (A).

Accordingly a preferred composition according to the present invention comprises
(A) a liquid phase comprising
   (A-1) one or more liquids having a melting point of -20 °C or less and a boiling point of 150 °C or more
   (A-2) optionally one or more liquids having a boiling point of 120 °C or less,
(B) one or more polymers which are copolymerization products of
   - two or more different (meth)acrylate monomers CHR¹=CH-(CO)-OR² wherein
      R¹ is hydrogen or methyl
      R² is selected from the group consisting of
         - linear and branched unsubstituted alkyl groups having 1 to 22 carbon atoms, preferably 2 to 22 carbon atoms
         - linear and branched hydroxyalkyl groups having 2 to 22 carbon atoms
         - cycloalkyl groups having 3 to 22 carbon atoms,
         - alkyl-substituted cycloalkyl groups having 4 to 22 carbon atoms,
   - and optionally one or more further monomers having polymerizable double bonds which are not (meth)acrylate monomers CHR¹=CH-(CO)-OR²
(C) one or more compounds having electrochromic and photochromic properties
(D) one or more electrolytes,
(E) one or more polyurethane polymers which are polyadducts of
   (E1) diisocyanate monomers
      and
   (E2) diols consisting of
      (E2-1) a portion of first diols having a molecular weight in the range of from 50 g/mol to < 500 g/mol, preferably from 50 g/mol to 490 g/mol
      (E2-2) a portion of second diols having a molecular weight in the range of from 500 g/mol to 3500 g/mol
   wherein the fraction of
   (E1) diisocyanate monomers is 20 wt.-% to 80 wt.-%
   (E2-1) said first diols is 5 wt.-% to 35 wt.-%
   (E2-2) said second diols is 5 wt.-% to 60 wt.-%
   based on the total weight of said (E1) diisocyanate monomers and (E2) diols
wherein the constituents (B), (C), (D) and (E) are dissolved or dispersed in said liquid phase (A).

As used herein the phrase "dissolved or dispersed" means that the
- either all of said constituents are dissolved in said liquid phase (A),
- or all of said constituents are dispersed in said liquid phase (A),
- or some of said constituents are dissolved in said liquid phase (A) and some of said constituents are dispersed in said liquid phase (A).

As used herein, the weight fractions of said diisocyanate monomers (E1), first diols (E2-1) and second diols (E2-2) represent the weight fractions of the corresponding building units formed from said diisocyanate monomers (E1), first diols (E2-1) and second diols (E2-2) in said polyurethane polymer (E).

Suitable polyurethane polymers are commercially available. As known by the skilled person, polyurethane polymers are obtainable by polyaddition of diisocyanate monomers with diols. Said first diols (E2-1) are also referred to as chain extending agents or chain extenders. For further details see e.g. WO 2014/060342.

Preferably, said diisocyanate monomers (E1) are selected from the group consisting of 4,4-methylene dicyclohexyl diisocyanate and 1,6-hexamethylene diisocyanate.

Preferably, said first diols (E2-1) are selected from the group consisting of 1,3-propanediol, 1,4-butanediol, 1,6-hexanediol and hydroquinone-bis(hydroxyethyl)ether.

Preferably, said second diols (E2-2) are selected from the group consisting of polyether diols, polyolefine diols and polyester diols.

Typically said constituent (E) is a mixture of polyurethane molecules which are polyadducts of the same diisocyanate monomers (B), first diols (B2-1) and second diols (B2-2), but have different molecular weight.

More preferably,
- said diisocyanate monomers (E1) are selected from the group consisting of 4,4-methylene dicyclohexyl diisocyanate and 1,6-hexamethylene diisocyanate
   and
- said first diols (E2-1) are selected from the group consisting of 1,3-propanediol, 1,4-butanediol, 1,6-hexanediol and hydroquinone-bis(hydroxyethyl)ether
   and
- said second diols (E2-2) are selected from the group consisting of
- polyether diols
- polyolefine diols and
- polyester diols.

Polyetherdiols are also referred to as poly(alkyleneglycole)s.

Further preferably, said second diols (E2-2) are selected from the group consisting of
- polyetherdiols selected from the group consisting of
   - polytetrahydrofuranes (also referred to as poly(tetramethylenglycol)s),
   - poly(ethylene glycol)s
   - poly(propylene glycol)s
   - diols of copolymers of ethylene oxide and propylene oxide
- polyolefine diols selected from the group consisting of
   - polyethylene diols (molecules consisting of a polyethylene chain, wherein said chain is terminated by -(CH₂)₂OH groups)
   - polybutadiene diols (molecules consisting of a chain of 1,2-linked butadiene units, wherein said chain is terminated by -(CH₂)₂OH groups)
- polyester diols selected from the group consisting of
   - polycaprolactones,
   - random polyester condensates which are polycondensation products of C₂-C₁₂ aliphatic dicarboxylic acids and diols selected from the group consisting of C₂-C₁₂ aliphatic diols, poly(ethyleneglycol)s, poly(propyleneglycol)s and diols of copolymers of ethylene oxide and propylene oxide.
   - polycarbonate diols.

Preferably, said polytetrahydrofuranes have 10 to 40 -(CH₂)₄-O- units.

Preferably, in said poly(ethylene glycol)s the number of -(CH₂)₂-O- groups is 11 to 75.

Preferably, in said poly(propylene glycol)s the number of -CH(CH₃)-CH₂-O- groups is 8 to 60.

Preferably, said diols of copolymers of ethylene oxide and propylene oxide have a structure according to formula (I)

HO-(CH₂CRO)n-H (I)

wherein n is an integer from 9 to 110 and R is H or methyl.

Preferably, in said polyethylene diols 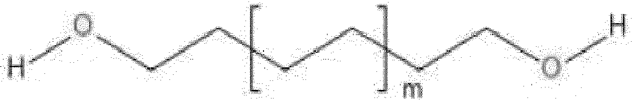 m is an integer of from 20 to 90, i.e. the polyethylene chain has 20 to 90 ethylene units.

Preferably, in said polybutadiene diols 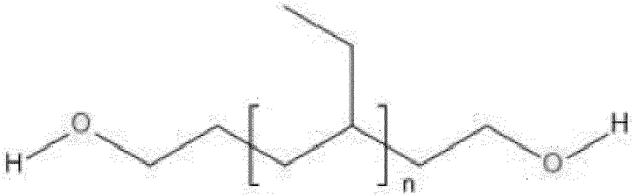 n is an integer of from 10 to 40, i.e. the polybutadiene chain has 10 to 40 1,2-linked butadiene units

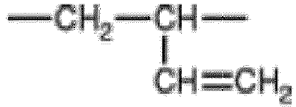

Preferably in said polycaprolactones 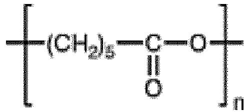 n is an integer of from 6 to 22.

Preferably said random polyester diols have a structure according to formula (II)

HO-R¹-[O-(C=O)-R²-(C=O)-O-R³]ₚ-OH (II)

wherein
R¹ is selected from the group consisting of
- (CH₂)ᵣ wherein r is an integer selected from 2 to 12
   and
- (CH₂CHR⁴O)ₛ wherein
   - s is an integer selected from 4 to 20
   - in said s groups (CHR⁴O) each R⁴ independently from each further R⁴ is selected from the group consisting of H and CH₃
p is an integer selected from 5 to 40
and in said p groups -[O-(C=O)-R²-(C=O)-O-R³]-
- each R² independently from each further R² is selected from the group consisting of (CH2)q wherein q is an integer selected from 0 to 10
- each R³ independently from each further R³ is selected from the group consisting of
   - (CH₂)ᵣ wherein r is an integer selected from 2 to 12
      and
   - (CHR⁴O)s wherein
      - s is an integer selected from 4 to 24
      - and in said s groups (CHR⁴O) each R⁴ is independently from each further R⁴ selected from the group consisting of H and CH₃.

Preferably in said polycarbonate diols 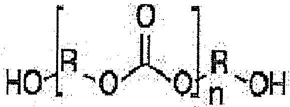
each R independently from each other R is selected from the group consisting of -CₘH₂ₘ- wherein m is an integer selected from 4 to 6,
and n is an integer selected from 3 to 29.

Preferred are
- polycarbonate diols wherein the groups R are -[(CH₂)₄]- and -[(CH₂)₆]- (also referred to as "polycarbonate diols based on butane diol and hexane diol", see WO 2013/190118)
- polycarbonate diols wherein the groups R are -[(CH₂)₅]- and -[(CH₂)₆]- (also referred to as "polycarbonate diols based on pentane diol and hexane diol", see WO 2013/190118)
- and polycarbonate diols wherein all groups R are -[(CH₂)₆]- (also referred to as "polycarbonate diols based on hexane diol", see WO 2013/190118)

Most preferred are polycarbonate diols wherein the groups R are -[(CH₂)₅]- and -[(CH₂)₆]-.

The above-mentioned diols are commercially available.

Polyurethane polymers which are polyadducts of
(E1) diisocyanate monomers, preferably the above-described preferred diisocyanate monomers (E1)
   and
(E2) diols consisting of
   (E2-1)a portion of first diols having a molecular weight in the range of from 50 g/mol to < 500 g/mol, preferably from 50 g/mol to 490 g/mol, preferably the above-defined preferred first diols (E2-1)
   (E2-2)a portion of second diols having a molecular weight in the range of from 500 g/mol to 3500 g/mol, wherein said second diols are polycarbonate diols as defined above
are preferred polyurethane polymers (E) for the present invention. Those polyurethane polymers are commercially available and are described e.g. in WO 2013/190118.

Preferably, said polyurethane polymers (E) have a weight average molecular weight in the range of from 25000 g/mol to 1000000 g/mol as determined by gel permeation chromatography.

Preferably, said polyurethane polymers (E) are thermoplastic polyurethane polymers.

Preferably, said polyurethane polymers (E) are linear polyurethane polymers.

Preferred polyurethane polymers (E) are those wherein two or more of the above-defined preferred features are combined.

Surprisingly it has been found that a combination of above-defined (meth)acrylate polymers (B) and above-described polyurethane polymers (E) results in superior rheological properties and accordingly superior quality of the layer formed from a composition according to the present invention (i.e. the layer obtainable by the process of the present invention), especially in case of electrochromic layers.

For coating and printing compositions, especially screen printing inks, a rheological behavior exhibiting thixotropy or shear thinning is desirable, allowing the composition to flow sufficiently to form a uniform layer when applied to a surface of a substrate, and then to resist further flow, thus remaining as a layer on said surface of said substrate. Without wishing to be bound by theory, it is assumed that in a preferred composition according to the present invention as defined above said polyurethane polymers (E) as defined above act as rheological modifiers in such manner that shear thinning or thixotropy is imparted to the composition.

For further details regarding the preferred polyurethane polymers, reference is made to the non-prepublished patent application "Composition especially for printing or coating comprising polyurethane polymers" filed by the same applicant and on the same day as the present application. The content of said patent application is incorporated herein by reference.

In certain cases it is preferred that a composition according to the present invention further comprises
(F) one or more crosslinking agents for said polymers (B) and/or (E).

Crosslinking of said polymers (B) and/or -if present- said polymers (E) imparts increased chemical and mechanical stability to said polymers (B) and/or said polymers (E). Suitable crosslinking agents are known in the art. Preferably, said crosslinking agents exhibit significant cross-linking activity only after a certain temperature is reached (thermally activated crosslinking agents). The crosslinking agents (F) are chemically different from the above-defined polymers (B) and (E).

Furthermore, the composition may optionally contain compounds that serve to enhance the switching speed of the electrochromic system (charge compensator, charge transfer agent). Examples of these are known in the art and include e.g. viologens.

A particularly preferred composition according to the present invention comprises
(A-1) a total amount of from 40 wt.-% to 90 wt.-%, preferably 60 wt.-% to 75 wt.-%, of liquids having a melting point of -20 °C or less and a boiling point of 150 °C or more
(B) a total amount of from 4 wt.-% to 25 wt.-%, preferably 6 wt.-% to 16 wt.-% of meth(acrylate) polymers as defined above
(C) a total amount of from 5 wt.-% to 25 wt.-%, preferably 10 wt.-% to 20 wt.-%, of compounds having electrochromic and photochromic properties
(D) a total amount of from 0.1 wt.-% to 10 wt.-%, preferably 0.5 wt.-% to 5 wt.-%, of electrolytes
in each case based on the total weight of constituents (A-1), (B), (C) and (D).

Another particularly preferred composition according to the present invention comprises
(A-1) a total amount of from 40 wt.-% to 90 wt.-%, preferably 60 wt.-% to 75 wt.-%, of liquids having a melting point of -20 °C or less and a boiling point of 150 °C or more
(B) a total amount of from 4 wt.-% to 25 wt.-%, preferably 6 wt.-% to 16 wt.-% of meth(acrylate) polymers as defined above
(C) a total amount of from 5 wt.-% to 25 wt.-%, preferably 10 wt.-% to 20 wt.-%, of compounds having electrochromic and photochromic properties
(D) a total amount of from 0.1 wt.-% to 10 wt.-%, preferably 0.5 wt.-% to 5 wt.-%, of electrolytes

in each case based on the total weight of constituents (A-1) (B), (C) and (D), and
(A-2) a total amount of liquids having a boiling point of 120 °C or less in a range of from 0 wt.-% to 500 wt.-%, preferably 10 wt.-% to 250 wt.-% based on the total weight of constituents (A-1), (B), (C) and (D).

Another particularly preferred composition according to the present invention comprises
(A-1) a total amount of from 40 wt.-% to 90 wt.-%, preferably 60 wt.-% to 75 wt.-%, of liquids having a melting point of -20 °C or less and a boiling point of 150 °C or more
(B) a total amount of from 4 wt.-% to 25 wt.-%, preferably 6 wt.-% to 16 wt.-% of meth(acrylate) polymers as defined above
(C) a total amount of from 5 wt.-% to 25 wt.-%, preferably 10 wt.-% to 20 wt.-%, of compounds having electrochromic and photochromic properties
(D) a total amount of from 0.1 wt.-% to 10 wt.-%, preferably 0.5 wt.-% to 5 wt.-%, of electrolytes
(F) a total amount of from 0 wt.-% to 15 wt.-%, preferably 0.1 wt.-% to 5 wt.-%, of crosslinking agents for said polymers (B)
in each case based on the total weight of constituents (A-1), (B), (C), (D) and (F),
and
(A-2) a total amount of liquids having a boiling point of 120 °C or less in a range of from 0 wt.-% to 500 wt.-%, preferably 10 wt.-% to 250 wt.-% based on the total weight of constituents (A-1), (B), (C), (D) and (F).

Another particularly preferred composition according to the present invention comprises
(A-1) a total amount of from 40 wt.-% to 90 wt.-%, preferably 60 wt.-% to 75 wt.-%, of liquids having a melting point of -20 °C or less and a boiling point of 150 °C or more
(B) a total amount of from 4 wt.-% to 25 wt.-%, preferably 6 wt.-% to 16 wt.-% of meth(acrylate) polymers as defined above
(C) a total amount of from 5 wt.-% to 25 wt.-%, preferably 10 wt.-% to 20 wt.-%, of compounds having electrochromic and photochromic properties
(D) a total amount of from 0.1 wt.-% to 10 wt.-%, preferably 0.5 wt.-% to 5 wt.-%, of electrolytes
(E) a total amount of from 0.5 wt.-% to 10 wt.-%, preferably 2 wt.-% to 5 wt.-% of polyurethane polymers as defined above
(F) a total amount of from 0 wt.-% to 15 wt.-%, preferably 0.1 wt.-% to 5 wt.-%, of crosslinking agents for said polymers (B) and/or (E)
in each case based on the total weight of constituents (A-1), (B), (C), (D), (E) and (F),
and
(A-2) a total amount of liquids having a boiling point of 120 °C or less in a range of from 0 wt.-% to 500 wt.-%, preferably 10 wt.-% to 250 wt.-% based on the total weight of constituents (A-1), (B), (C), (D), (E) and (F).

An especially preferred composition according to the present invention comprises
(A-1) a total amount of from 40 wt.-% to 90 wt.-%, preferably 60 wt.-% to 75 wt.-%, of liquids having a melting point of -20 °C or less and a boiling point of 150 °C or more
(B) a total amount of from 4 wt.-% to 25 wt.-%, preferably 6 wt.-% to 16 wt.-% of meth(acrylate) polymers as defined above
(C) a total amount of from 5 wt.-% to 25 wt.-%, preferably 10 wt.-% to 20 wt.-%, of compounds having electrochromic and photochromic properties
(D) a total amount of from 0.1 wt.-% to 10 wt.-%, preferably 0.5 wt.-% to 5 wt.-%, of electrolytes
(E) a total amount of from 0.5 wt.-% to 10 wt.-%, preferably 2 wt.-% to 5 wt.-% of polymers which are polyurethanes as defined above
(F) a total amount of from 0 wt.-% to 15 wt.-%, preferably 0.1 wt.-% to 5 wt.-%, of crosslinking agents for said polymers (B) and/or (E)
in each case based on the total weight of constituents (A-1), (B), (C), (D), (E) and (F).

In order to overcome the drawbacks of the prior art caused by the inferior properties of polymers from the group of polyvinylacetals, especially polyvinylbutyrals, it is preferred to keep the fraction of polyvinylacetals in a composition according to the present invention as low as possible. Accordingly, a composition according to the present invention preferably comprises
(G) polymers selected from the group consisting of polyvinylacetals in an amount of less than 25 wt.-%, preferably less than 10 wt.-%, further preferably less than 5 wt.-%, particularly preferably less than 1 wt.-%, in each case based on the total weight of polymers (B) and (E), and preferably does not comprise polyvinylacetals.

Particularly preferred compositions according to the present invention are those wherein two or more of the above-defined preferred features are combined. Particularly preferred are compositions wherein each of constituents (A-1), (B), (C), (D) and - if present - (A-2), (E) and (F) is selected from the above-defined preferred alternatives and is present in the above defined concentration ranges, preferably in a concentration falling in the above-defined preferred ranges.

According to a further aspect of the present invention, there is provided a process for producing a layer assembly comprising a colored or electrochromic layer. Said process comprises the steps of
- providing or preparing a composition according to the invention as defined above
- applying said composition to a surface of a first substrate
- allowing said composition applied to said surface to form a colored or electrochromic layer on said surface of said first substrate
- optionally attaching a second substrate on surface of said colored or electrochromic layer facing away from said first substrate.

Said composition is applied to a surface of a first substrate and allowed to form said colored or electrochromic layer on said surface. Preferably, said composition is applied to said surface of said substrate by means of a printing or coating technique, especially by a technique selected from the group consisting of screen printing and stencil printing.

In the obtained layer assembly, said first substrate has at least one surface which is not covered by the colored or electrochromic layer. Typically, said first substrate has a first surface on which said colored or electrochromic layer is arranged and a second surface opposite to said first surface, wherein on said second surface none such colored or electrochromic layer is arranged. This second surface of the first substrate is also referred to as the surface of the first substrate facing away from said colored or electrochromic layer. On the other hand, the colored or electrochromic layer has a surface in contact with said first surface of said first substrate, and a second surface opposite to said first surface. This second surface of the colored or electrochromic layer is also referred to as the surface of the colored or electrochromic layer facing away from said first substrate.

In cases where the composition applied to said surface further comprises any liquids (A-2) having a boiling point of 120 °C or less as defined above, which merely act as a vehicle for applying the composition to a surface of a substrate, forming said colored or electrochromic layer comprises removing said liquids (A-2) having a boiling point of 120 °C or less from said composition applied to said surface of said substrate.

In certain cases, the process according to the present invention further comprises the step of crosslinking said polymers (B) and - if present - (E) by means of crosslinking agents (F) as defined above.

Certain preferred processes according to the present invention further comprise the step of attaching a second substrate on surface of said electrochromic layer facing away from said first substrate.

The colored or electrochromic layer obtainable by the process of the present invention comprises at least the following constituents:
(B) one or more meth(acrylate) polymers
(C) one or more colorants selected from the group consisting of dyes, pigments and compounds having electrochromic and photochromic properties.

In a preferred process according to the present invention a layer assembly comprising an electrochromic layer is produced. Preferably, in said process the composition provided and applied to a surface of a first substrate is selected from the above-defined preferred compositions.

Preparing a preferred composition according to the present invention (as defined above) comprises the following steps:
- providing the desired amount of said one or more liquids (A-1)
- providing desired amounts of polymers (B) and optionally (E)
- adding said liquids (A-1) to the polymers (B) and optionally (E) to obtain a premixture comprising said liquids (A-1) and the polymers (B) and - if present - (E)
- heating the premixture under mechanical agitation, e.g. stirring, to a predetermined temperature in the range of from 100 °C to 120 °C and keeping the premixture at said temperature for a duration of 1 to 6 hours under mechanical agitation, e.g. stirring with optionally shaking the premixture up to three times per hour for a few seconds, to properly mix constituents (A-1) and (B) and - if present - (E),
- cooling the premixture down to a temperature in the range of from 80 °C to 100 °C without mechanical agitation,
- adding desired amounts of constituents (C) and (D) to the premixture, thus obtaining a preferred composition according to the present invention,
- keeping the composition for 5 minutes to 45 minutes under mechanical agitation, e.g. stirring, at said temperature in the range of from 80 °C to 100 °C to dissolve constituents (C) and (D),
- cooling the composition down to room temperature without mechanical agitation.

Optionally, crosslinking agents (F) for the polymers (B) and optionally (E) are added to the premixture resp. the composition when it has been cooled to a temperature at which the crosslinking agents exhibit no crosslinking activity, in order to preserve the activity of the crosslinking agents (F) for later processing steps (see below).

In a preferred process according to the present invention
- said first substrate and said second substrate each have a surface comprising at least one electronically conductive material selected from the group consisting of metals and transparent conducting oxides,
- a composition comprising constituents (A-1), (B), (C) and (D) and optionally constituents (E), (F) and (A-2) as defined above wherein said composition comprises a colorant (C) selected from the group consisting of compounds having electrochromic and photochromic properties, is applied to said surface of the first substrate comprising said at least one electronically conductive material,
- said composition applied to said surface is allowed to form an electrochromic layer on said surface
- and said surface of the second substrate comprising said at least one electronically conductive material is attached to the surface of said electrochromic layer facing away from said first substrate.

A particularly preferred process according to the present invention for producing a layer assembly comprising an electrochromic layer comprises the steps of
- providing or preparing a composition comprising constituents (A-1), (B), (C) and (D) and optionally constituents (E), (F) and (A-2) as defined above, wherein said composition comprises a colorant (C) selected from the group consisting of compounds having electrochromic and photochromic properties
- applying said composition to a surface of a first substrate, said surface of said first substrate comprising at least one electronically conductive material selected from the group consisting of metals and transparent conducting oxides
- allowing said composition applied to said surface of said first substrate to form an electrochromic layer on said surface
- optionally attaching a surface of a second substrate on a surface of said electrochromic layer facing away from said first substrate wherein said surface of said second substrate comprises at least one electronically conductive material selected from the group consisting of metals and transparent conducting oxides.

A further preferred process according to the present invention comprises the steps of
- providing a first substrate, wherein said first substrate has a surface comprising at least one electronically conductive material selected from the group consisting of metals and transparent conducting oxides
- providing or preparing a composition comprising constituents (A-1), (B), (C) and (D) and optionally constituents (E), (F) and (A-2) as defined above, wherein said composition comprises a colorant (C) selected from the group consisting of compounds having electrochromic and photochromic properties, and applying said composition to said surface of said first substrate
- allowing said composition applied to said surface to form an electrochromic layer on said surface of said first substrate
- optionally providing a second substrate, wherein said second substrate has a surface comprising at least one electronically conductive material selected from the group consisting of metals and transparent conducting oxides, and attaching said surface of said second substrate on a surface of said electrochromic layer facing away from said first substrate.

An especially preferred process according to the present invention for producing a layer assembly comprising an electrochromic layer comprises the steps of
- providing or preparing a composition comprising constituents (A-1) (B), (C) and (D) and optionally constituents (E), (F) and (A-2) as defined above, wherein said composition comprises a colorant (C) selected from the group consisting of compounds having electrochromic and photochromic properties
- applying said composition to a surface of a first substrate, said surface of said first substrate comprising at least one electronically conductive material selected from the group consisting of metals and transparent conducting oxides
- allowing said composition applied to said surface of said first substrate to form an electrochromic layer on said surface
- attaching a surface of a second substrate on a surface of said electrochromic layer facing away from said first substrate wherein said surface of said second substrate comprises at least one electronically conductive material selected from the group consisting of metals and transparent conducting oxides.

A further especially preferred process according to the present invention comprises the steps of
- providing a first substrate, wherein said first substrate has a surface comprising at least one electronically conductive material selected from the group consisting of metals and transparent conducting oxides,
- providing or preparing a composition comprising constituents (A-1) (B), (C) and (D) and optionally constituents (E), (F) and (A-2) as defined above, wherein said composition comprises a colorant (C) selected from the group consisting of compounds having electrochromic and photochromic properties, and applying said composition to said surface of said first substrate
- allowing said composition applied to said surface to form an electrochromic layer on said surface of said first substrate
- providing a second substrate, wherein said second substrate has a surface comprising at least one electronically conductive material selected from the group consisting of metals and transparent conducting oxides, and attaching said surface of said second substrate on a surface of said electrochromic layer facing away from said first substrate.

In these preferred processes according to the invention, the first substrate and the second substrate each have a surface comprising at least one electronically conductive material selected from the group consisting of metals and transparent conducting oxides, a composition according to the present invention comprising a colorant (C) selected from the group consisting of compounds having electrochromic and photochromic properties is applied to said surface of the first substrate comprising said at least one electronically conductive material, said composition applied to said surface is allowed to form an electrochromic layer on said surface and the surface of the second substrate comprising said at least one electronically conductive material is attached to the surface of said electrochromic layer facing away from said first substrate.

In certain cases, the process according to the present invention further comprises the step of crosslinking said polymers (B) and/or (E) by means of crosslinking agents (F) as defined above after attaching said surface comprising at least one electronically conductive material selected from the group consisting of metals and transparent conducting oxides of said second substrate on said surface of said electrochromic layer facing away from said first substrate.

The materials of the substrates are preferably selected such that at least one of said first and second substrate has a light transmission of 70 % or more, preferably 90 % or more, measured according to ASTM D1003 (Procedure A) as published in November 2013. Preferably, both of said substrates have a light transmission of 70 % or more, preferably 90 % or more, measured according to ASTM D1003 (Procedure A) as published in November 2013.

Said first and second substrate are both in a form selected from the group consisting of foils, films, webs, panes and plates. Preferably, said first and said second substrate have the same form and have equal dimensions. Said first and said second substrate may comprise the same or different materials.

Preferably, said substrate has a thickness in the range of from 1 µm to 1000 µm, preferably 10 µm to 500 µm and more preferably from 50 µm to 200 µm.

Preferably, said substrates comprise one or more materials selected from the group consisting of glasses, metals, transparent conducting oxides and organic polymers.

Preferably the first substrate and the second substrate each comprise an optically transparent material selected from the group of glasses and organic polymers, which is electronically insulating, and have a surface comprising at least one electronically conductive material selected from the group consisting of metals and transparent conducting oxides. Said surfaces of the first and said second substrate may comprise the same or different electronically conductive materials. The electronically conductive material forms electrodes capable of interacting with the electrochromic layer, i.e. applying an electrical field across said electrochromic layer.

Preferred types of glass are e.g. float glass, low iron float glass, heat strengthened glass and chemically strengthened glass. Optionally, the glass has a low-emissivity (low-e) coating, sun-protection coating or any other coating on the surface facing away from the above-described electrochromic layer.

Preferred organic polymers are selected from the group consisting of polymethylmethacrylate (PMMA, commercially available e.g. as Plexiglas™), polycarbonate (PC), polyethylene (PE), low density polyethylene (LDPE), linear low density polyethylene (LLDPE), polypropylene (PP), low density polypropylene (LDPP), polyethylene therephthalate (PET), glycol modified polyethylene therephthalate, polyethylene napthalate (PEN), cellulose acetate butyrate, polylactide (PL), polystyrene (PS), polyvinyl chloride (PVC), polyimides (PI), polypropyleneoxide (PPO) and mixtures thereof. PET and PEN are particularly preferred.

Preferably, said transparent conducting oxides (TCO) are selected from the group consisting of ITO (indium doped tin oxide), AZO (aluminum doped zinc oxide), IGZO (indium gallium doped zinc oxide), GZO (gallium doped zinc oxide), FTO (fluorine doped tin oxide), indium oxide, tin oxide and zinc oxide.

Preferably, at the above-defined surfaces of said substrates, said metals are present in the form of a structure which is substantially optically transparent, e.g. in the form of fine mesh or nanowires. Preferably, said metals are selected from the group consisting of Cu, Ag, Au, Pt and Pd.

Particularly preferable the first substrate and the second substrate each comprise an optically transparent material selected from the group of organic polymers, which is electronically insulating, and have a surface comprising at least one electronically conductive material selected from the group consisting of metals and transparent conducting oxides.

In the above-described preferred process according to the present invention, an electrochromic layer is formed, i.e. a layer comprising a colorant (C) in the form of a compound having electrochromic and photochromic properties as defined above. Said electrochromic layer comprises
- one or more polymers (B) which are copolymerization products of
   - two or more different (meth)acrylate monomers CHR¹=CH-(CO)-OR² wherein
      R¹ is hydrogen or methyl
      R² is selected from the group consisting of
         - linear and branched unsubstituted alkyl groups having 1 to 22 carbon atoms, preferably 2 to 22 carbon atoms
         - linear and branched hydroxyalkyl groups having 2 to 22 carbon atoms
         - cycloalkyl groups having 3 to 22 carbon atoms,
         - alkyl-substituted cycloalkyl groups having 4 to 22 carbon atoms,
   - and optionally one or more further monomers having polymerizable double bonds which are not (meth)acrylate monomers CHR¹=CH-(CO)-OR²
- dispersed within said polymers (B) a liquid phase comprising (A-1) one or more liquids having a melting point of -20 °C or less and a boiling point of 150 °C or more
- and dissolved within said liquid phase (A-1)
   (C) one or more compounds having electrochromic and photochromic properties
   (D) one or more electrolytes.

Optionally, said electrochromic layer further comprises one or more polyurethane polymers (E) which are polyadducts of
(E1) diisocyanate monomers
   and
(E2) diols consisting of
   (E2-1)a portion of first diols having a molecular weight in the range of from 50 g/mol to < 500 g/mol, preferably from 50 g/mol to 490 g/mol
   (E2-2)a portion of second diols having a molecular weight in the range of from 500 g/mol to 3500 g/mol
wherein the fraction of
(E1) diisocyanate monomers is 20 wt.-% to 80 wt.-%
(E2-1)said first diols is 5 wt.-% to 35 wt.-%
(E2-2)said second diols is 5 wt.-% to 60 wt.-%
based on the total weight of said (E1) diisocyanate monomers and (E2) diols.

In this case the electrochromic layer comprises
- one or more polymers (B) as defined above and one or more polymers (E) as defined above
- dispersed within said polymers (B) and (E) a liquid phase comprising (A-1) one or more liquids having a melting point of -20 °C or less and a boiling point of 150 °C or more
- and dissolved within said liquid phase (A-1)
   (C) one or more compounds having electrochromic and photochromic properties
   (D) one or more electrolytes.

Optionally in said electrochromic layer the polymer (B) and/or -if present- the polymer (E) are cross-linked.

Preferably, said electrochromic layer comprises no liquids having a boiling point of 120 °C or less.

Said electrochromic layer preferably has a thickness in the range of from 1 µm to 250 µm, more preferably of from 5 µm to 50 µm, most preferably of from 20 µm to 40 µm. Thickness may be determined by interferometry, optical 3D microscopy or usual mechanical methods.

Without being bound to theory, it is believed that within the electrochromic layer the polymers (B) and (E) (if present) form a contiguous gel-like phase (sometimes also referred to as a semisolid phase) extending throughout the electrochromic layer. Said contiguous gel-like phase is herein referred to as a matrix. Said matrix accommodates the above-defined constituents of the electrochromic layer which are dispersed within said matrix. Without being bound to theory, it is believed that in the electrochromic layer said liquid phase comprising the liquids (A-1) (as defined above) wherein said constituents (C) and (D) as defined above are dissolved, is confined within free spaces extending through the matrix comprising said polymers (B) and (E) (if present), thus providing a network of paths throughout the electrochromic layer extending between a first and a second electrode. This network of paths allows flow of ions of the electrolytes (D) and molecules of the compounds (C) when an electric voltage is applied.

Accordingly, the electrochromic layer preferably comprises
- a matrix comprising one or more polymers (B) as defined above and optionally one or more polymers (E) as defined above
- dispersed within said matrix a liquid phase comprising
   (A-1) one or more liquids having a melting point of -20 °C or less and a boiling point of 150 °C or more
- and dissolved within said liquid phase (A-1)
   (C) one or more compounds having electrochromic and photochromic properties
   (D) one or more electrolytes.

Regarding specific and preferred characteristics and the functions of the individual constituents of the electrochromic layer, reference is made to the disclosure provided above.

A further aspect of the present invention relates to an article comprising a layer assembly consisting of
- a first substrate,
- an electrochromic layer arranged on and in contact with a surface of said first substrate, said electrochromic layer comprising
   - one or more polymers (B) which are copolymerization products of
      - two or more different (meth)acrylate monomers CHR¹=CH-(CO)-OR² wherein
         R¹ is hydrogen or methyl
         R² is selected from the group consisting of
            - linear and branched unsubstituted alkyl groups having 1 to 22 carbon atoms, preferably 2 to 22 carbon atoms
            - linear and branched hydroxyalkyl groups having 2 to 22 carbon atoms
            - cycloalkyl groups having 3 to 22 carbon atoms,
            - alkyl-substituted cycloalkyl groups having 4 to 22 carbon atoms,
      - and optionally one or more further monomers having polymerizable double bonds which are not (meth)acrylate monomers CHR¹=CH-(CO)-OR²
   - dispersed within said polymers (B) a liquid phase comprising
      (A-1) one or more liquids having a melting point of -20 °C or less and a boiling point of 150 °C or more
   - and dissolved within said liquid phase
      (C) one or more compounds having electrochromic and photochromic properties
      (D) one or more electrolytes
- optionally a second substrate having a surface arranged on and in contact with a surface of said electrochromic layer facing away from said first substrate
wherein said surfaces of said substrates which are in contact with said electrochromic layer comprise at least one electronically conductive material selected from the group consisting of metals and transparent conducting oxides.

Optionally, said electrochromic layer further comprises one or more polyurethane polymers (E) which are polyadducts of
(E1) diisocyanate monomers
   and
(E2) diols consisting of
   (B2-1)a portion of first diols having a molecular weight in the range of from 50 g/mol to < 500 g/mol, preferably from 50 g/mol to 490 g/mol (B2-2)a portion of second diols having a molecular weight in the range of from 500 g/mol to 3500 g/mol
wherein the fraction of
(E1) diisocyanate monomers is 20 wt.-% to 80 wt.-%
(E2-1)said first diols is 5 wt.-% to 35 wt.-%
(E2-2)said second diols is 5 wt.-% to 60 wt.-%
based on the total weight of said (E1) diisocyanate monomers and (E2) diols.

Regarding specific and preferred characteristics of the electrochromic layer, reference is made to the disclosure provided above. Regarding specific and preferred characteristics of the individual constituents of the electrochromic layer, reference is made to the disclosure provided above. With regard to specific and preferred characteristics of the substrates, reference is made to the disclosure provided above.

A layer assembly for an article according to the present invention is obtainable by the above-described process.

In certain cases, an article according to the present invention consists of a layer assembly consisting of
- a substrate,
- an electrochromic layer as defined above, said electrochromic layer being arranged on and in contact with a surface of said substrate,
wherein said surface of said substrate which is in contact with said electrochromic layer comprises at least one electronically conductive material selected from the group consisting of metals and transparent conducting oxides.

In other cases, an article according to the present invention consists of a layer assembly consisting of
- a first substrate.
- a second substrate
- and an electrochromic layer as defined above
wherein
- said first substrate has a surface comprising at least one electronically conductive material selected from the group consisting of metals and transparent conducting oxides
- said second substrate has a surface comprising at least one electronically conductive material selected from the group consisting of metals and transparent conducting oxides
- said electrochromic layer is interposed between and in contact with
   - said surface of the first substrate which comprises at least one electronically conductive material selected from the group consisting of metals and transparent conducting oxides and
   - said surface of the second substrate which comprises at least one electronically conductive material selected from the group consisting of metals and transparent conducting oxides.

In other cases, an article according to the present invention comprises a layer assembly consisting of
- a first substrate,
- a second substrate
- and an electrochromic layer as defined above
wherein
- said first substrate has a surface comprising at least one electronically conductive material selected from the group consisting of metals and transparent conducting oxides
- said second substrate has a surface comprising at least one electronically conductive material selected from the group consisting of metals and transparent conducting oxides
- said electrochromic layer is interposed between and in contact with
   - said surface of the first substrate which comprises at least one electronically conductive material selected from the group consisting of metals and transparent conducting oxides and
   - said surface of the second substrate which comprises at least one electronically conductive material selected from the group consisting of metals and transparent conducting oxides.

The electronically conductive materials at the surface of the first and second substrate form electrodes capable of interacting with the electrochromic layer, i.e. applying an electrical field across said electrochromic layer.

In an article according to the present invention the electrochromic layer is arranged on a surface of said substrate in such manner that it partially or completely covers said surface of said substrate. In specific cases the electrochromic layer forms a pattern on said surface of said substrate. The pattern may be selected from any random and non-random structures, like grids, stripes, waves, dots and circles.

A preferred article according to the present invention further comprises a first support layer comprising a material selected from the group consisting of glass and organic polymers, and a second support layer comprising a material selected from the group consisting of glass and organic polymers, wherein said layer assembly is disposed between said first support layer and said second support layer.

Said first and second support layer are both in a form selected from the group consisting of foils, films, webs, panes and plates. Preferably, said first and said second support layer are of the same material, have the same form and have equal dimensions.

Preferred types of glass are e.g. float glass, low iron float glass, heat strengthened glass and chemically strengthened glass. Optionally, the glass has a low-emissivity (low-e) coating, sun-protection coating or any other coating on the surface facing away from the above-described layer assembly.

The materials of the support layers are selected such that at least one of said support layers has a light transmission of 70 % or more, preferably 90 % or more, measured according to ASTM D1003 (Procedure A) as published in November 2013. Preferably, both of said support layers have a light transmission of 70 % or more, preferably 90 % or more, measured according to ASTM D1003 (Procedure A) as published in November 2013.

Optionally, antireflection (AR) coating can be used to enhance the transmittance through optical devices, and a variety of low refractive index, nanoporous, and/or nanostructured coatings can be applied to glass and plastic substrates (see for example: C. G. Granqvist, Transparent conductors as solar energy materials: a panoramic review, Solar Energy Mater. Solar Cells 91, 1529-1598 (2007)). It has been demonstrated that coating both sides of a glass pane with self-assembled silica nanoparticle films made it possible to obtain a transmittance as large as 99.5% in the middle of the luminous spectrum (cf. P. Nostel, A. Roos, and B. Karlsson, Optical and mechanical properties of sol-gel antireflective films for solar energy applications, Thin Solid Films 351, 170-175 (1999); S. E. Yancey, W. Zhong, J. R. Heflin, and A.L. Ritter, The influence of void space on antireflection coatings of silica nanoparticle self-assembled films, J. Appl. Phys. 99, 034313 vol. 1-10 (2006).

Preferred organic polymers are selected from the group consisting of polymethylmethacrylate (PMMA, commercially available e.g. as Plexiglas™), polycarbonate (PC), polyethylene (PE), low density polyethylene (LDPE), linear low density polyethylene (LLDPE), polypropylene (PP), low density polypropylene (LDPP), polyethylene therephthalate (PET), glycol modified polyethylene therephthalate, polyethylene napthalate (PEN), cellulose acetate butyrate, polylactide (PL), polystyrene (PS), polyvinyl chloride (PVC), polyimides (PI), polypropyleneoxide (PPO) and mixtures thereof.

In certain articles according to the present invention, said first support layer is attached to the first substrate by an adhesive and/or said second support layer is attached to said second substrate by an adhesive.

Further preferably, said article comprises a first adhesive layer between said first substrate and said first support layer and a second adhesive layer between said second substrate and said second support layer.

The adhesives are selected such that the adhesive layer has a light transmission which is not lower than the light transmission of the support layer which is attached to the layer assembly by said adhesive.

Suitable adhesives are thermoplastics, e.g. polyvinylbutyral commercially available e.g. under the trade names Butvar, Mowital, Pioloform, BUTACITE, SAFLEX, S-Lec, TROSIFOL, polyvinylalcohol, polyvinylacetate, ethylene-vinylacetate-copolymers, silicones, polyurethanes, ionomer resins (commercially available e.g. under the trade name SentryGlas®) and polymethylmethacrylate (PMMA).

Techniques for attaching said support layers to said layer assembly are known in the art and are described e.g. in WO 2013/152425. Typically, attaching said support layers to said layer assembly is achieved by application of heat, or heat and pressure (e.g. in an autoclave or a press or by means of heated rolls), or heat with reduced pressure (e.g. in a vacuum bag).

An article according to the invention typically comprises further elements, e. g. electrical connections, switches, controlling units, supporting structures and sealants. Such further elements are known in the art.

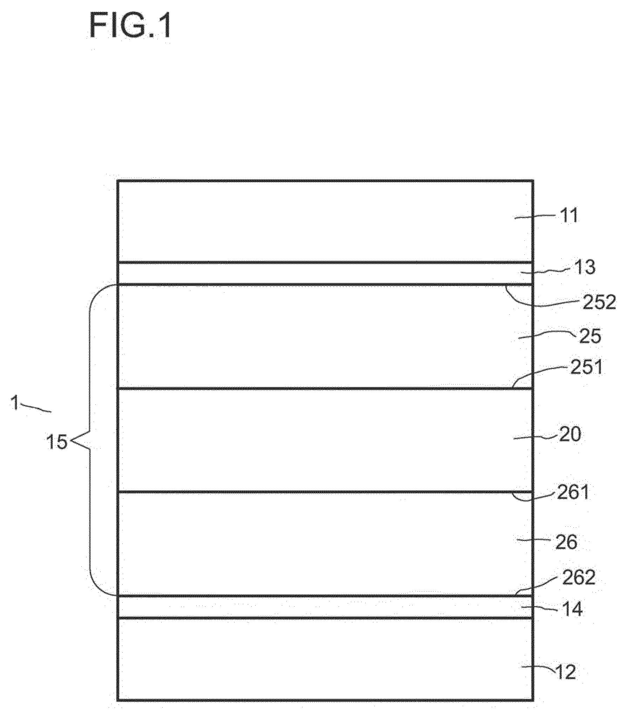

An exemplary preferred article according to the present invention is illustrated in figure 1 which is a schematic side elevation of said article not drawn to scale.

The article 1 according to figure 1 consists of
- a first support layer 11 and a second support layer 12
- a first adhesive layer 13 and a second adhesive layer 14
- a layer assembly 15 consisting of
   - a first substrate 25 having a surface 251 and a surface 252
   - an electrochromic layer 20
   - a second substrate 26 having a surface 261 and a surface 262.

Said electrochromic layer 20 comprises
- one or more polymers (B) as defined above and optionally one or more polymers (E) as defined above
- dispersed within said polymers a liquid phase comprising (A-1) one or more liquids having a melting point of -20 °C or less and a boiling point of 150 °C or more
- and dissolved within said liquid phase
   (C) one or more compounds having electrochromic and photochromic properties
   (D) one or more electrolytes.

Said electrochromic layer 20 is interposed between surface 251 of the first substrate 25 and surface 261 of the second substrate 26. The materials of the substrates 25 and 26 are selected such that at least one of said substrates has a light transmission of 70 % or more, preferably 90 % or more, measured according to ASTM D1003 (Procedure A) as published in November 2013. Surface 251 of said first substrate 25 which is in contact with electrochromic layer 20 comprises at least one electronically conductive material selected from the group consisting of metals and transparent conducting oxides, thereby forming a first electrode at surface 251 of said first substrate 25. Surface 261 of said second substrate 26 which is in contact with electrochromic layer 20 comprises at least one electronically conductive material selected from the group consisting of metals and transparent conducting oxides, thereby forming a second electrode at surface 261 of said second substrate 26. Said electrodes are capable of interacting with the electrochromic layer 20, i.e. applying an electrical field across said electrochromic layer 20.

Article 1 further comprises a first adhesive layer 13 between said first substrate 15 and said first support layer 11 and a second adhesive layer 14 between said second substrate 16 and said second support layer 12. In said article, said first support layer 11 is attached by means of first adhesive layer 13 to surface 252 of said first substrate 25 facing away from said electrochromic layer 20, and said second support layer 12 is attached by means of second adhesive layer 14 to said surface 262 of said second substrate 26 facing away from said electrochromic layer 20.

Based on article 1 as shown in figure 1, one or more of the following modifications are possible, which correspond to other preferred articles according to the present invention:
- omitting one or both of adhesive layers 13 and 14
- omitting support layer 11 and adhesive layer 13
- omitting support layer 12 and adhesive layer 14
- omitting support layers 11 and 12 and adhesive layers 13 and 14.

### Examples

Several compositions were prepared and the rheological behavior was studied by means of viscosity curves (viscosity as a function of the shear rate). Basic studies of the rheological behavior were carried out with compositions comprising constituents (A-1), (B) and/or (E), but without constituents (C) and (D). In this manner, a combination of polymers (B) and (E) having very promising rheological behavior was identified.

Independently, a mixture (A-1) having high compatibility with diarylethene compounds disclosed in WO 2013/044371 as constituent (C) was identified.

Then, a composition comprising
- compounds selected from the diarylethene compounds disclosed in WO 2013/044371 as constituent (C)
- the mixture (A-1) identified to have high compatibility with such diarylethene compounds and
- a combination of polymers (B) and (E) having very promising rheological behavior was tested in order to verify that the advantageous rheological behavior also occurs in the presence of constituent (C).

For practical reasons, constituent (D) was omitted.

The constituents of the tested composition are listed in table 1. The data in the columns "amount wt.-%" refer to the weight percentage of the corresponding constituent based on the total weight of all constituents (A-1), (B), (E) and (C).

In table 1, H12MDI means 4,4-methylene dicyclohexyl diisocyanate, and pTHF1000 means polytetrahydrofurane having a molecular weight in the range of from 975 to 1025 g/mol. As regards the polyurethane polymers used in the examples, only the type of the diisocyanate (E1) and the second diol (E2-1) are indicated in table 1. The first diol (E2-1) was in each case selected from the group consisting of 1,3-propanediol, 1,4-butanediol and 1,6-hexanediol, and the proportions of (E1), (E2-1) and (E2-2) were within the above-defined ranges.

Preparing the compositions was carried out as follows:
- providing polymers (B) and/or (E) within one vessel
- adding said liquid mixture (A-1) into said vessel to obtain a premixture comprising said liquid mixture (A-1) and polymers (B) and/or (E)
- heating the premixture under stirring to a temperature of 120 °C and keeping the premixture at said temperature for a duration of 90 minutes under stirring with optionally shaking the premixture up to three times per hour for a few seconds, to properly mix constituents (A-1) and (B) and/or (E),
- cooling the premixture down to a temperature of 80 °C without stirring
- adding constituents (C) to the premixture to obtain a composition comprising the constituents (A-1), (C) and (B) and/or (E)
- keeping the composition for 15 minutes under stirring at said temperature in the range of from 80 °C to 100 °C to dissolve constituent (C)
- cooling the composition down to room temperature without stirring.

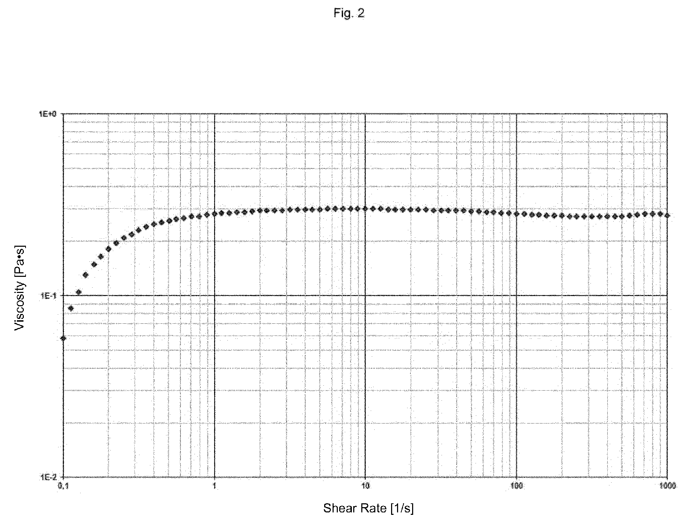

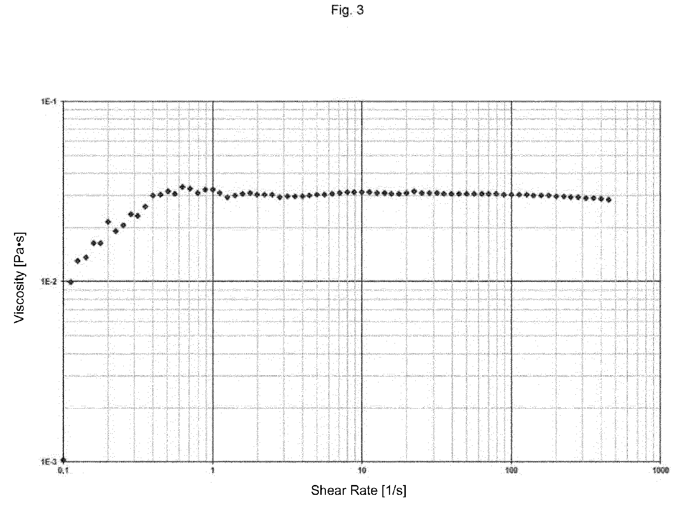

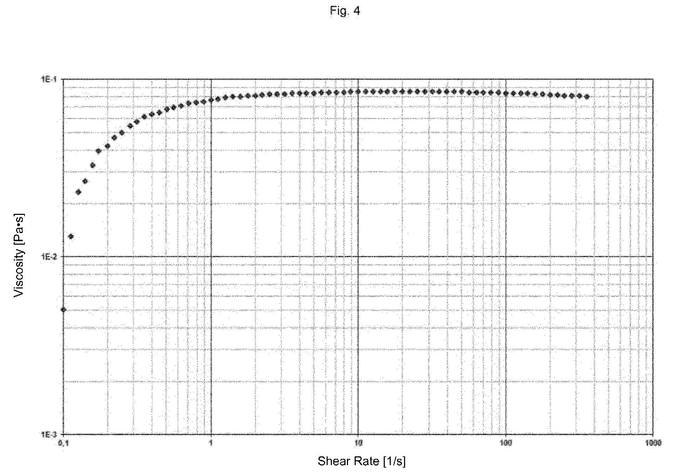

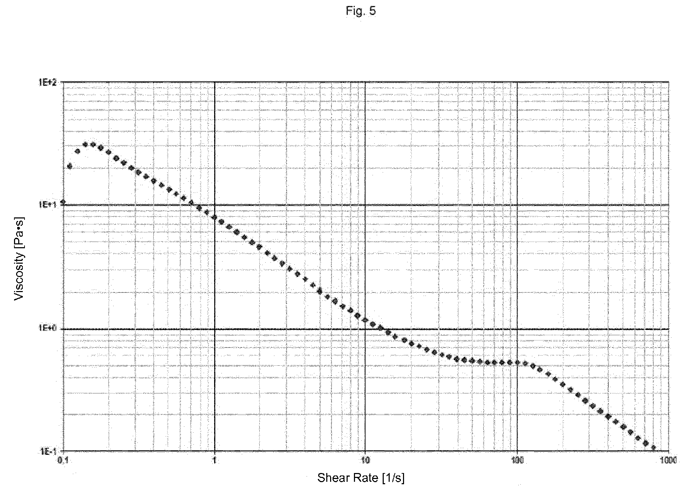

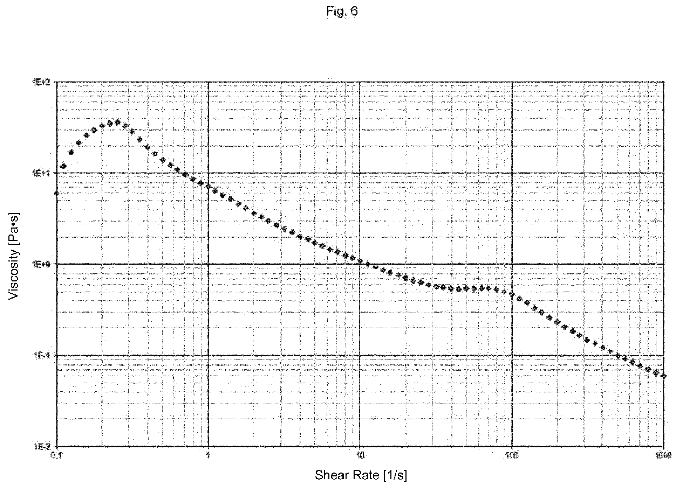

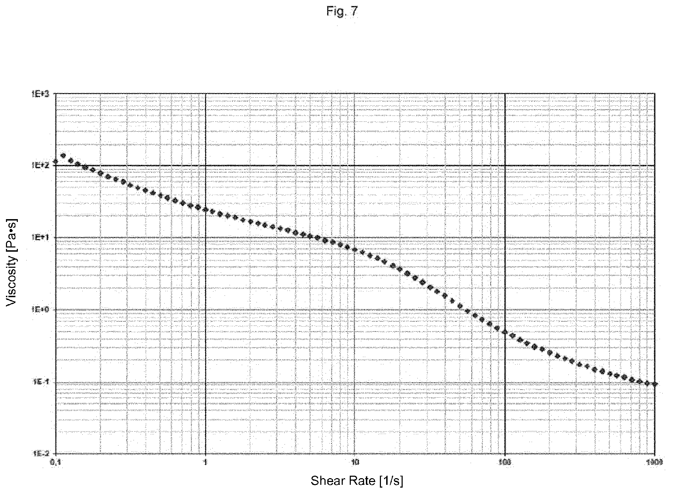

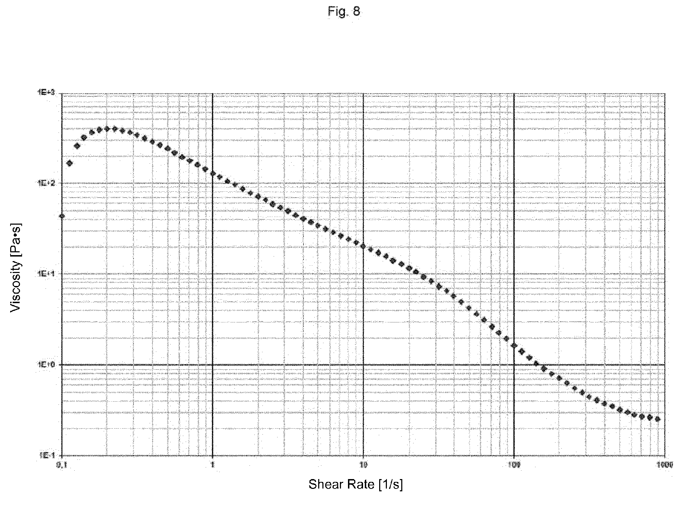

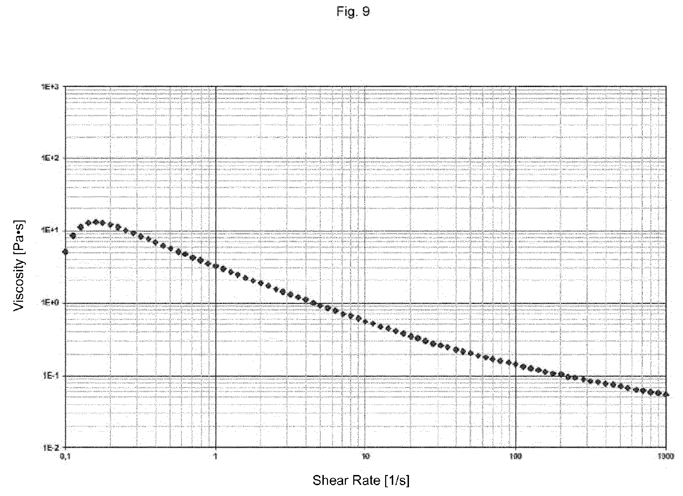

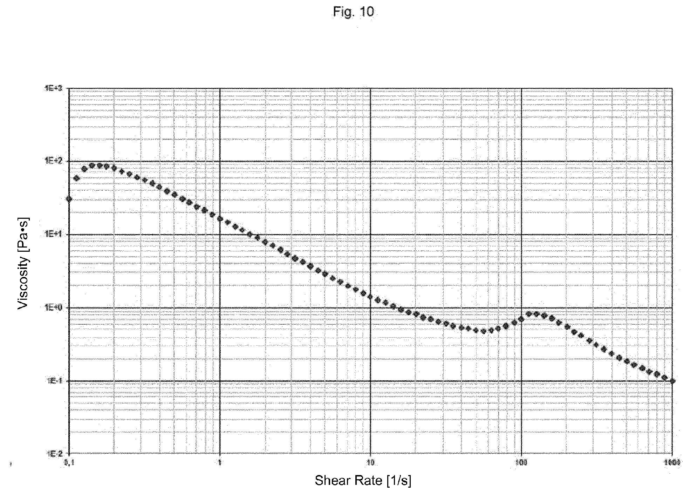

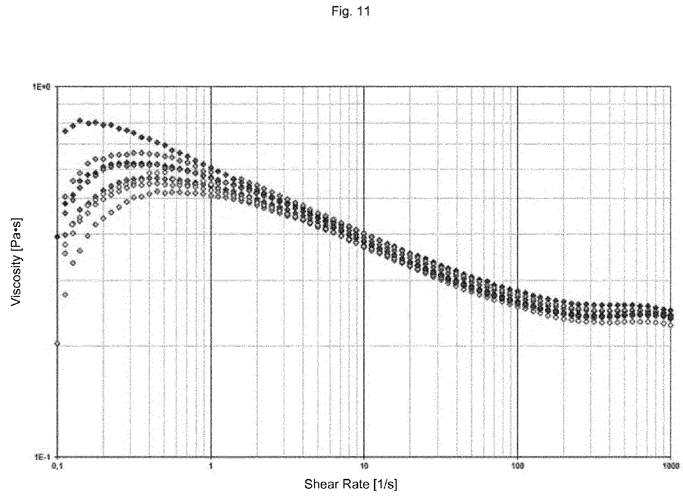

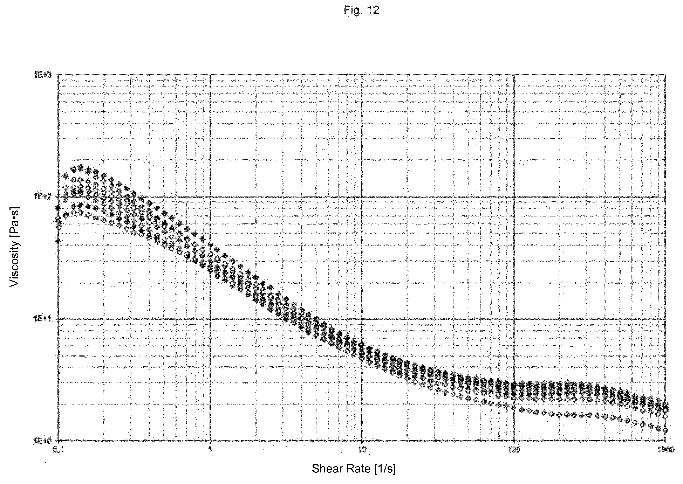

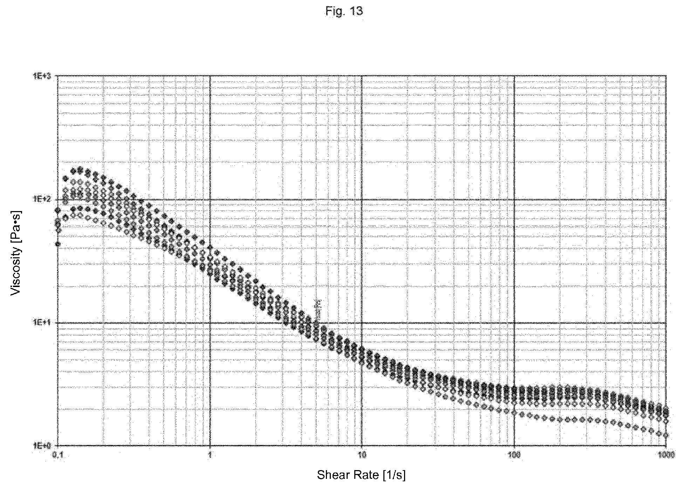

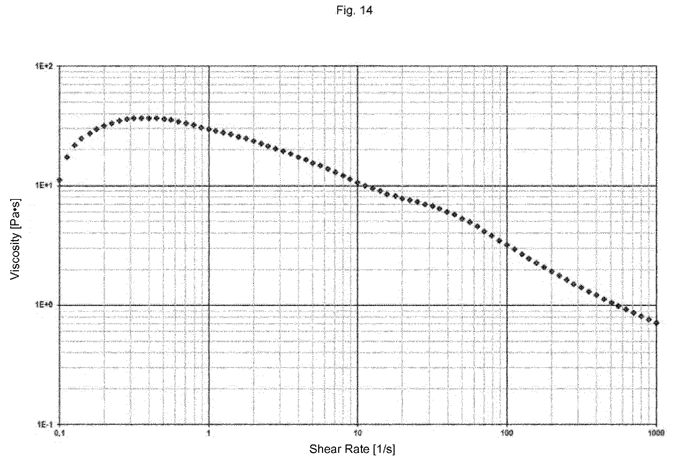

The viscosity curves of compositions 1-13 are shown in figures 2-14. Compositions 4-9 are comparison examples. The viscosity curves were measured at 25 °C by means of a Rheometer Anton Paar MCR 302.

The compositions of examples 1-3 which do not contain any polyurethane polymers (E) exhibit approximately Newtonian behavior, as the viscosity is not significantly influenced by the shear rate over a broad range (from low shear to high shear).

The compositions of comparison examples 4-9 (polymer B not present) exhibit shear thinning (beyond a shoulder at low shear rate, the viscosity declines with increasing shear rate). However, the overall viscosity is rather high, due to gel formation.

The compositions of examples 10-12 exhibit shear thinning and a significantly reduced gel formation, compared to examples 4-9. Accordingly, the viscosity was lower compared to examples 4-9. For compositions 10-12 the measurement was repeated 8 times. The deviations were within the measurement accuracy.

Example 13 shows that the advantageous rheological behavior of the combination of polymers (B) and (E) according to example 10 also occurs in the presence of constituent (C). Obviously the rheological behavior is mainly effected by the polymers (B) and (E) while the influence of dissolved constituents like constituent (C) on the rheological behavior is virtually negligible.

**Table 1**

| Composition No | Constituent (A-1) | | Constituent (B) | | Constituent (E) | | Constituent (C) | |
|---|---|---|---|---|---|---|---|---|
| | type | amount [wt%] | type | amount [wt%] | type | amount [wt%] | type | amount [wt%] |
| 1 | mixture consisting of 1.2-butylene carbonate (20 parts by weight) tert- butylcyclohexylacetate (65 parts by weight) propylene glycol diacetate (15 parts by weight) | 90 | Copolymer of hydroxyethylmethacrylate and ethylmethacrylate molar ratio 1:1 186 kDa | 10 | none | 0 | none | 0 |
| 2 | mixture consisting of 1.2-butylene carbonate (20 parts by weight) cyclohexylacetate (65 parts by weight) propylene glycol diacetate (15 parts by weight | 90 | Copolymer of hydroxyethylmethacrylate and n-dodecylmethacrylate molar ratio 1:1 170 kDa | 10 | none | 0 | none | 0 |
| 3 | mixture consisting of 1.2-butylene carbonate (20 parts by weight) cyclohexylacetate (65 parts by weight) propylene glycol diacetate (15 parts by weight | 90 | Copolymer of hydroxyethylmethacrylate, ethylmethacrylate and cyclohexylmethacrylate molar ratio 9:9:2 175 kDa | 10 | none | 0 | none | 0 |
| 4 | mixture consisting of 1.2-butylene carbonate (20 parts by weight) tert-butylcyclohexylacetate (65 parts by weight) propylene glycol diacetate (15 parts by weight | 97 | none | 0 | H12MDI-*co*-polycaprolactone, 55 kDa | 3 | none | 0 |
| 5 | mixture consisting of 1.2-butylene carbonate (20 parts by weight) cyclohexylacetate (65 parts by weight) propylene glycol diacetate (15 parts by weight) | 97 | none | 0 | H12MDI-*co*-polycaprolactone, 55 kDa | 3 | none | 0 |
| 6 | mixture consisting of 1.2-butylene carbonate (20 parts by weight) tert-butylcyclohexylacetate (65 parts by weight) propylene glycol diacetate (15 parts by weight | 97 | none | 0 | H12MD1-*co*-pTHF1000, 113 kDa, | 3 | none | 0 |
| 7 | mixture consisting of 1.2-butylene carbonate (20 parts by weight) cyclohexylacetate (65 parts by weight) propylene glycol diacetate (15 parts by weight) | | none | 0 | H12MD1-*co*-pTHF1000, 113 kDa, | 3 | none | 0 |
| 8 | mixture consisting of 1.2-butylene carbonate (20 parts by weight) tert-butylcyclohexylacetate (65 parts by weight) propylene glycol diacetate (15 parts by weight | | none | 0 | H12MDI-*co*-polycarbonate diol, 50-60 kDa, | 3 | none | 0 |
| 9 | mixture consisting of 1.2-butylene carbonate (20 parts by weight) cyclohexylacetate (65 parts by weight) propylene glycol diacetate (15 parts by weight) | | none | 0 | H12MDI-*co*-polycarbonate diol, 50-60 kDa, | 3 | none | 0 |
| 10 | mixture consisting of 1.2-butylene carbonate (20 parts by weight) cyclohexylacetate (65 parts by weight) propylene glycol diacetate (15 parts by weight | 87 | Copolymer of hydroxyethylmethacrylate and n-dodecylmethacrylate molar ratio 1:1 170 kDa | 10 | H12MDI-*co-*polycaprolactone, 55 kDa | 3 | none | 0 |
| 11 | mixture consisting of 1.2-butylene carbonate (20 parts by weight) cyclohexylacetate (65 parts by weight) propylene glycol diacetate (15 parts by weight) | 87 | Copolymer of hydroxyethylmethacrylate, ethylmethacrylate and cyclohexylmethacrylate molar ratio 9:9:2 175 kDA | 10 | H12MDI-*co-*polycaprolactone, 55 kDa | 3 | none | 0 |
| 12 | mixture consisting of 1.2-butylene carbonate (20 parts by weight) cyclohexylacetate (65 parts by weight) propylene glycol diacetate (15 parts by weight) | 87 | Copolymer of hydroxyethylmethacrylat,e ethylmethacrylate and cyclohexylmethacrylate molar ratio 9:9:2 175 kDa | 10 | H12MD1--*co-*polycarbonatediol, 50-60 kDa | 3 | none | 0 |
| 13 | mixture consisting of 1.2-butylene carbonate (20 parts by weight) tert-butylcyclohexylacetate (65 parts by weight) propylene glycol diacetate (15 parts by weight | 71 | Copolymer of Hydroxyethylmethacrylate, and n-dodecylmethacrylate molar ratio 1:1 170 kDa | 10 | H12MDI-*co-*polycaprolactone, 55 kDa | 3 | diarylethene compounds (8 parts by weight) | 16 |

## Claims

1. Composition comprising the following constituents
(A) a liquid phase
(B) one or more polymers which are copolymerization products of
- two or more different (meth)acrylate monomers CHR¹=CH-(CO)-OR² wherein
R¹ is hydrogen or methyl
R² is selected from the group consisting of
- linear and branched unsubstituted alkyl groups having 1 to 22 carbon atoms, preferably 2 to 22 carbon atoms
- linear and branched hydroxyalkyl groups having 2 to 22 carbon atoms
- cycloalkyl groups having 3 to 22 carbon atoms,
- alkyl-substituted cycloalkyl groups having 4 to 22 carbon atoms,
- and optionally one or more further monomers having polymerizable double bonds which are not (meth)acrylate monomers CHR¹=CH-(CO)-OR²
(C) one or more colorants selected from the group consisting of dyes, pigments and compounds having electrochromic and photochromic properties
wherein the constituents (B) and (C) are dissolved or dispersed in said liquid phase (A).

2. Composition according to claim 1, wherein
said liquid phase (A) comprises or consists of one or more liquids having a boiling point of 120 °C or less.

3. Composition according to claim 1, comprising
(A) a liquid phase comprising
(A-1) one or more liquids having a melting point of -20 °C or less and a boiling point of 150 °C or more
(A-2) optionally one or more liquids having a boiling point of 120 °C or less,
(B) one or more polymers which are copolymerization products of
- two or more different (meth)acrylate monomers CHR¹=CH-(CO)-OR² wherein
R¹ is hydrogen or methyl
R² is selected from the group consisting of
- linear and branched unsubstituted alkyl groups having 1 to 22 carbon atoms, preferably 2 to 22 carbon atoms
- linear and branched hydroxyalkyl groups having 2 to 22 carbon atoms
- cycloalkyl groups having 3 to 22 carbon atoms
- alkyl-substituted cycloalkyl groups having 4 to 22 carbon atoms
- and optionally one or more further monomers having polymerizable double bonds which are not (meth)acrylate monomers CHR¹=CH-(CO)-OR²
(C) one or more compounds having electrochromic and photochromic properties
(D) one or more electrolytes,
wherein the constituents (B), (C) and (D) are dissolved or dispersed in said liquid phase (A).

4. Composition according to any preceding claim, comprising a polymer (B) having a weight average molecular weight in the range of from 10000 g/mol to 2000000 g/mol as determined by gel permeation chromatography.

5. Composition according to any preceding claim, comprising a polymer (B) which is a polymerization product of two or three different (meth)acrylate monomers CHR¹=CH-(CO)-OR².

6. Composition according to any preceding claim, further comprising
(E) one or more polyurethane polymers which are polyadducts of
(E1) diisocyanate monomers
and
(E2) diols consisting of
(E2-1) a portion of first diols having a molecular weight in the range of from 50 g/mol to < 500 g/mol preferably from 50 g/mol to 490 g/mol
(E2-2) a portion of second diols having a molecular weight in the range of from 500 g/mol to 3500 g/mol
wherein the fraction of
(E1) diisocyanate monomers is 20 wt.-% to 80 wt.-%
(E2-1) said first diols is 5 wt.-% to 35 wt.-%
(E2-2) said second diols is 5 wt.-% to 60 wt.-%
based on the total weight of said (E1) diisocyanate monomers and (E2) diols dissolved or dispersed in said liquid phase (A).

7. Composition according to any preceding claim, further comprising (F) one or more crosslinking agents for said polymers (B) and/or (E).

8. Composition according to any preceding claim, wherein
said compounds (C) having electrochromic and photochromic properties are selected from the group consisting of hexatrienes, diarylethenes, dithienylcyclopentenes and fulgides
and/or
said electrolytes (D) are selected from the group consisting of ionic liquids having
- cations selected from the group consisting of tetraalkyl ammonium, 1-alkyl-3-methyl imidazolium, 1-alkyl-1-methyl pyrrolidinium and 1-alkyl-1-methyl piperidinium, wherein said alkyl is selected from the group consisting of methyl, ethyl, n-propyl and n-butyl,
- and anions selected from the group consisting of tetrafluoroborate, tetracyanoborate, hexafluorophosphate, bis(fluoromethyl)sulfonylimide, bis(trifluoromethylsulfonyl)imide and tris(pentafluoroethyl)trifluorophosphate.

9. Process for producing a layer assembly comprising a colored or electrochromic layer, comprising the steps of
- providing or preparing a composition according to any of claims 1 to 8
- applying said composition to a surface of a first substrate
- allowing said composition applied to said surface to form a colored or electrochromic layer on said surface of said first substrate
- optionally attaching a second substrate on a surface of said colored or electrochromic layer facing away from said first substrate.

10. Process according to claim 9, wherein
- said first substrate and said second substrate each have a surface comprising at least one electronically conductive material selected from the group consisting of metals and transparent conducting oxides,
- a composition according to any of claims 3 to 8 is applied to said surface of the first substrate comprising said at least one electronically conductive material,
- said composition applied to said surface is allowed to form an electrochromic layer on said surface
- and said surface of the second substrate comprising said at least one electronically conductive material is attached to the surface of said electrochromic layer facing away from said first substrate.

11. Process according to any of claims 9 and 10, wherein said composition is applied to said surface of said substrate by means of a technique selected from the group consisting of printing and coating.

12. Process according to any of claims 9 to 11, wherein forming said layer comprises removing said liquids (A-2) having a boiling point of 120 °C or less from said composition applied to said surface of said substrate.

13. Process according to any of claims 9 to 12, further comprising the step of crosslinking said polymers (B) and/or (E) after attaching said surface of said second substrate on said surface of said electrochromic layer facing away from said first substrate.

14. Use of a polymer (B) which is a copolymerization product of
- two or more different (meth)acrylate monomers CHR¹=CH-(CO)-OR² wherein
R¹ is hydrogen or methyl
R² is selected from the group consisting of
- linear and branched unsubstituted alkyl groups having 1 to 22 carbon atoms, preferably 2 to 22 carbon atoms
- linear and branched hydroxyalkyl groups having 2 to 22 carbon atoms
- cycloalkyl groups having 3 to 22 carbon atoms,
- alkyl-substituted cycloalkyl groups having 4 to 22 carbon atoms,
- and optionally one or more further monomers having polymerizable double bonds which are not (meth)acrylate monomers CHR¹=CH-(CO)-OR²
as a rheological modifier in a composition according to any of claims 1 to 8.

15. An article comprising
a layer assembly consisting of
- a first substrate
- an electrochromic layer arranged on and in contact with a surface of said first substrate, said electrochromic layer comprising
- one or more polymers (B) which are copolymerization products of
- two or more different (meth)acrylate monomers CHR¹=CH-(CO)-OR² wherein
R¹ is hydrogen or methyl
R² is selected from the group consisting of
- linear and branched unsubstituted alkyl groups having 1 to 22 carbon atoms, preferably 2 to 22 carbon atoms
- linear and branched hydroxyalkyl groups having 2 to 22 carbon atoms
- cycloalkyl groups having 3 to 22 carbon atoms,
- alkyl-substituted cycloalkyl groups having 4 to 22 carbon atoms,
- and optionally one or more further monomers having polymerizable double bonds which are not (meth)acrylate monomers CHR¹=CH-(CO)-OR²
- dispersed within said polymers (B) a liquid phase comprising (A-1) one or more liquids having a melting point of -20 °C or less and a boiling point of 150 °C or more
- and dissolved within said liquid phase
(C) one or more compounds having electrochromic and photochromic properties
(D) one or more electrolytes
- optionally a second substrate, said second substrate having a surface arranged on and in contact with a surface of said electrochromic layer facing away from said first substrate
- wherein said surfaces of said substrates which are in contact with said electrochromic layer comprise at least one electronically conductive material selected from the group consisting of metals and transparent conducting oxides.

16. Article according to claim 15,
said article further comprising a first support layer comprising a material selected from the group consisting of glass and organic polymers, and a second support layer comprising a material selected from the group consisting of glass and organic polymers,
wherein said layer assembly is disposed between said first support layer and said second support layer.
